# EUROPÄISCHE PATENTSCHRIFT

(11) **EP 0 717 406 B1**
(45) Veröffentlichungstag und Bekanntmachung des Hinweises auf die Patenterteilung: **13.03.2002**
(21) Anmeldenummer: 95119333.3
(22) Anmeldetag: 07.12.1995
(51) Int. Cl.: G11B 20/10, G11B 7/09, G11B 19/28, G11B 19/04

(54) **Erschütterungsresistentes Abspielgerät**
Vibration-resistant reproducing apparatus
Appareil de lecture résistant aux vibrations

(30) Priorität: 16.12.1994 DE 4445012; 16.12.1994 DE 4445023
(43) Veröffentlichungstag der Anmeldung: 19.06.1996
(73) Patentinhaber: DEUTSCHE THOMSON-BRANDT GMBH, 78048 Villingen-Schwenningen (DE)
(72) Erfinder: Takagi, Hirohito, D-78052 Villingen-Schwenningen (DE); Rutschmann, Richard, D-79793 Wutöschingen (DE); Lannuzel, Olivier, F-92700 Colombes (FR)

(56) Entgegenhaltungen:
- EP-A- 0 249 781
- EP-A- 0 260 722
- EP-A- 0 400 810
- EP-A- 0 550 097
- EP-A- 0 649 131
- DE-A- 4 103 973
- PATENT ABSTRACTS OF JAPAN vol. 017 no. 058 (P-1481) ,4.Februar 1993 & JP-A-04 268249 (SONY CORP) 24.September 1992,

## Beschreibung

Die Erfindung betrifft eine Anordnung für ein erschütterungsresistentes Abspielgerät mit verringerter Rücksprungzahl und mit verringertem Energieverbrauch. Der Anwendungsbereich erschütterungsresistenter Abspielgeräte erstreckt sich insbesondere auf den transportablen bzw. mobilen Einsatz von Abspielgeräten optischer Informationsträger, bei denen trotz Erschütterungen eine ununterbrochene bzw. ungestörte Informationswiedergabe zu gewährleisten ist, wobei der Anwendungsbereich jedoch nicht auf optische Informationsträger eingeschränkt ist.

Insbesondere optische Abtastgeräte sind empfindlich gegenüber mechanischen Erschütterungen, da das optische Abtastsystem durch Erschütterungen aus der Bahn geworfen werden kann und dadurch der Lesevorgang der auf dem Informationsträger gespeicherten Information unterbrochen wird. Im stationären Betrieb sind diese Erschütterungen so klein, daß sie durch mechanische Vorkehrungen und elektrische Regelkreise ausreichend gedämpft werden können. Bei mobilem Einsatz, wie beispielsweise im Auto oder bei tragbaren Geräten, reichen oben genannte Maßnahmen jedoch nicht mehr aus, und es wird ein Zwischenspeicher verwendet, der während einer Unterbrechung des Lesens des Informationsträgers den Datenstrom zur Wiedergabe puffert. Ein derartiger Zwischenspeicher ist gemäß Datenblatt des Schaltkreises CXD2511Q/R von Sony (Vibration-Protective Memory Controller for CD Players) bekannt. Zum Bereitstellen eines Datenvorrats werden die Daten mit doppelter Geschwindigkeit von der CD gelesen und im Zwischenspeicher abgelegt. Gleichzeitig werden Daten zur Wiedergabe aus dem Speicher mit Normalgeschwindigkeit ausgelesen. Um ein Überlaufen des Speichers zu verhindern, muß das Lesen des Informationsträgers bzw. das Schreiben von Daten in den Zwischenspeicher kontinuierlich unterbrochen und der Lesevorgang nach Unterschreiten eines Minimal-Füllstandes des Zwischenspeichers fortgesetzt werden. Hierzu ist das Abtast-bzw. Lesesystem an den Ort der Unterbrechung zurückzuführen und das Lesen des Informationsträgers kontinuierlich fortzusetzen. Dieses Ablaufschema wird kontinuierlich fortgesetzt, sofern keine Erschütterung auftritt. Dadurch ist bereits im erschütterungsfreien Betrieb eine hohe Zahl von Rücksetzungen bzw. Rücksprüngen des Abtast- bzw. Lesesystems erforderlich. Tritt eine Erschütterung während einer Lesepause auf sind keine besonderen Maßnahmen erforderlich.

Tritt die Erschütterung jedoch während des Lesevorgangs auf, so ist das Auffüllen des Zwischenspeichers sofort abzubrechen und das Abtastsystem möglichst schnell an den Ort zurückzuführen, an dem der Lesevorgang unterbrochen wurde, um erneut Daten vom Informationsträger bzw. der CD zu lesen. Nach erfolgreichem Abschluß dieser Operation wird das Auffüllen des Zwischenspeichers fortgesetzt. Dieses Springen oder Rücksetzen des Abtastsystems an den Ort der Unterbrechung des Lesens von der CD ist somit sowohl erforderlich, wenn Erschütterungen auftreten, als auch erforderlich, wenn keine Erschütterungen in der Betriebsart Erschütterungsresistenz auftreten, da der mit doppelter Geschwindigkeit durchgeführte Lesevorgang bei gefülltem Zwischenspeicher unterbrochen werden muß.

Zum Schreiben von Daten des Informationsträgers in den Zwischenspeicher nach einer Unterbrechung entsprechend der auf dem Informationsträger vorhandenen Reihenfolge, wird das Lesen von der CD mit Daten vor der letzten als gültig mit einem Mikroprozessor ausgewerteten Subcode-Adresse fortgesetzt, und zum Starten des Schreibens in den Zwischenspeicher bzw. zur in der Aufeinanderfolge richtigen Fortsetzung wird ein Vergleich zwischen gespeicherten und gelesenen Audio-Daten durchgeführt. Dieser Audio-Datenvergleich, der bei positivem Ergebnis das Fortsetzen des Schreibens in den Zwischenspeicher steuert, wird nach der Dekodierung und Fehlerkorrektur bzw. unmittelbar vor der digital/analog Wandlung durchgeführt. Der Zwischenspeicher ist an der De-Interleaving und Fehlerkorrektureinheit des Dekoders angeschlossen bzw. unmittelbar vor dem digital/analog Wandler angeordnet. ( Interleaving = Verschachtelung, Überlappung, Codespreizung)

Neben der relativ hohen Rücksprungzahl ohne Erschütterungen besteht ein Problem dieser Lösung in der Zuverlässigkeit der Datensynchronisation für das Starten des Einschreibvorgangs in den Zwischenspeicher. Die auf dem Audio-Datenvergleich beruhende Synchronisation ist nicht immer erfolgreich, da die Datenbits aufgrund von Fehlern nicht stets in gleicher Weise und zeitgenau auftreten. Ein zeitlicher Versatz tritt weiterhin auf, beim Vergleich sehr leiser Passagen, bei dem nur Nullen verglichen werden, oder beim Vergleich von Passagen, die mehrfache Wiederholungen, wie beispielsweise einen Sinus-Ton mit bestimmter Frequenz enthalten. Der im Zusammenhang mit den Unterbrechungen häufig durchzuführende Datenvergleich bietet keine Gewähr für das Ermitteln des exakten Synchronisationszeitpunktes, führt zu Sprüngen in den Audio-Daten und gewährleistet somit aufgrund von Zeitsprüngen in der Titel- bzw. Diskzeit keine zeitgenaue und der gespeicherten Information entsprechende Wiedergabe.

Ein weiteres Problem stellt der mit der doppelten Lesegeschwindigkeit und dem häufigen Spurspringen im Zusammenhang stehende Energieverbrauch dar. Die Lebensdauer von Batterien in transportablen Geräten wird durch die Dekodierung mit doppelter Geschwindigkeit und eine erhöhte Anzahl von Aktuatorsteuerungen ungefähr auf die Hälfte verringert. Dieser erhöhte Energieverbrauch tritt auch im Betrieb ohne Erschütterungen auf, da das Lesen der CD mit doppelter Geschwindigkeit ein Unterbrechen des Schreibvorgangs und Zurücksetzen bzw. Umsteuern der Abtasteinheit erfordert.

Ferner ist als Zwischenspeicher für den möglichst exakten Datenvergleich ein DRAM vorzusehen, der einen erheblichen Kostenfaktor darstellt.

Für die Funktionsfähigkeit transportabler CD-Spieler ist die Widerstandsfähigkeit gegenüber von außen auf das Gerät einwirkenden Stößen und Schwingungen von ausschlaggebender Bedeutung. Für den CD-Genuß beim Jogging ist es bekannt, einen "digitalen Stoßdämpfer" vorzusehen, vgl. Walter Schild: Ein digitaler Stoßdämpfer für CD-Genuß beim Jogging in der Tageszeitung Die Welt vom 16.07.1992. Um trotz einer kurzzeitigen Unterbrechung der Informationsabtastung von der CD infolge eines Stoßes, durch den der Laser- bzw. Abtaststrahl die Informationsspur verliert, eine ungestörte bzw. ununterbrochene Informationswiedergabe zu ermöglichen, wird die CD mit doppelter Geschwindigkeit angetrieben und werden vom Informationsträger gelesene Daten zwischengespeichert. Für den Zeitraum einer Unterbrechung stehen dann Daten aus dem Zwischenspeicher zur ungestörten Informationswiedergabe zur Verfügung. Diese Eigenschaft portabler CD-Spieler wird deshalb auch als sogenanntes "shock proof memory" oder "shock protection memory" bezeichnet. Die mit doppelter Geschwindigkeit angetriebene Platte liefert doppelt so schnell Daten, als dies zur Wiedergabe erforderlich ist, so daß der Zwischenspeicher auch nach einer Unterbrechung schnell wieder mit Daten aufgefüllt wird. Die Antriebsdrehzahl ist dabei jedoch nicht konstant, da CD's mit einer konstanten Lineargeschwindigkeit, der sogenannten CLV (constant linear velocity) gelesen werden. Da die CD im Innenbereich der Platte bei einer Umdrehung eine geringere Anzahl von Pits als im Außenbereich aufweist, wird zum Gewährleisten einer konstanten Lesegeschwindigkeit die Antriebsdrehzahl des Plattentellers beim Lesen von innen nach außen entsprechend verringert. Zur Drehzahlregelung wird dabei eine der Lesegeschwindigkeit entsprechende konstante Referenzfrequenz verwendet. Die aktuelle Geschwindigkeitsinformation wird der Frequenz des vom Informationsträger abgetasteten Signals entnommen, die den sogenannten Istwert im Regelkreis bildet.

Ist der Zwischenspeicher vollständig gefüllt, wird das Einlesen der Daten so lange unterbrochen, bis ein vorgegebener Füllstand erreicht ist, der das weitere Einlesen von Daten rechtfertigt.

Auch in dieser Zeit wird der Informationsträger mit doppelter Geschwindigkeit angetrieben und die Abtastgeschwindigkeit mit dem Regelkreis auf konstante Lineargeschwindigkeit CLV geregelt. Das Unterbrechen des Einlesevorganges bedingt bereits ohne das Auftreten von Störungen ein häufiges Spurspringen und häufige Drehzahländerungen, da das Abtasten des Informationsträgers nach einer Unterbrechung des Lesevorganges an einer Stelle fortzusetzen ist, bei der der Lesevorgang zuvor unterbrochen wurde. Das häufige Spurspringen und das Antreiben des Informationsträgers mit doppelter Geschwindigkeit führen zu einem erhöhten Energiebedarf, der sich insbesondere nachteilig auf die mit Batterien erreichbare Gesamtspielzeit auswirkt. Die mit einem Batteriesatz erreichbare Gesamtspielzeit im shock proof Betrieb verringert sich aufgrund des Antriebes mit doppelter Geschwindigkeit, einer Dekodierung des Abtastsignals mit doppelter Geschwindigkeit und einer erhöhten Anzahl von Bewegungen des Aktuators bzw. Abtastsystems infolge erhöhten Spurspringes gegenüber dem Normalbetrieb mit einfacher Abtastgeschwindigkeit ungefähr auf die Hälfte.

Gemäß EP-A-0 400 810 ist es bereits bekannt, beim Auftreten einer Unterbrechung des Lesens vom Informationsträger während des Spursprungs aufgrund von Vibrationen, die Lesegeschwindigkeit vom Informationsträger auf eine zweite Geschwindigkeit zu erhöhen und Daten mit der zweiten Taktrate in den Zwischenspeicher einzulesen und es ist ebenfalls aus JP-A-04 26 82 49 bekannt, die zweite, höhere Lesegeschwindigkeit nur zu verwenden, wenn die im Zwischenspeicher verbleibende Anzahl von Daten abnimmt.

Darüber hinaus ist es gemäß EP-A-0 649 131 bekannt, einen ersten und einen zweiten Füllstand des Zwischenspeichers zu verwenden, um erste und zweite Servomittel ein- bzw. auszuschalten und mit Frequenzteilern sowie Phasenvergleichern vorgegebene Vielfache für unterschiedliche Lesegeschwindigkeiten vom Informationsträger und entsprechende Taktraten zur Informationsspeicherung einzustellen.

EP-A-0 400 810 offenbart ein Abspielgerät gemäß den Merkmalen des Oberbegriffes von Anspruch 1.

Es ist deshalb Aufgabe der Erfindung, die Rücksprungzahl zu verringern und die genannten Nachteile der bekannten Lösung zu vermeiden und ein erschütterungsresistentes Abspielgerät zu schaffen, das trotz Gewährleistung der "shock proof memory" Funktion einen geringen Energieverbrauch aufweist.

Diese Aufgabe wird mit den im unabhängigen Hauptanspruch 1 angegebenen Merkmalen gelöst. Vorteilhafte Aus- und Weiterbildungen sind in abhängigen Ansprüchen angegeben.

Die Erfindung geht von einem erschütterungsresistenten Abspielgerät aus, das trotz Gewährleistung des Schutzes gegen Erschütterungen überwiegend mit einfacher Abspielgeschwindigkeit betrieben wird und bei dem im Betrieb ohne Erschütterungen keine Unterbrechung des Lesevorgangs vom Informationsträger auftritt, wodurch ein häufiges Spurspringen vermieden und der Energieverbrauch wesentlich reduziert werden. Weiterhin können Zuverlässigkeit und Genauigkeit der Datensynchronisation nach einer erschütterungsbedingten Unterbrechung erhöht und kann ein gegenüber einem DRAM kostengünstigerer Zwischenspeicher verwendet werden.

Diese Vorteile werden mit einer Anordnung und einem Verfahren zum Steuern der Lesegeschwindigkeit vom Informationsträger in Abhängigkeit von einem vorgegebenen Füllstand des Zwischenspeichers unterhalb seiner maximalen Speicherkapazität erreicht, wobei die Steueranordnung die Lesegeschwindigkeit vom Informationsträger variiert, um eine vorgegebene Anzahl von Daten in einem Zwischenspeicher ohne Unterbrechung der Wiedergabe vor ihrem Auslesen aus dem Zwischenspeicher zu speichern. Ein Überlaufen des Speichers oder das Unterschreiten eines Minimal-Füllstandes des Zwischenspeichers wird ohne Unterbrechung des Lesens vom Informationsträger dadurch verhindert, daß eine zum Auffüllen des Zwischenspeichers erhöhte Lesegeschwindigkeit bereits bei einem vorgegebenen Füllstand des Zwischenspeichers unterhalb seiner maximalen Speicherkapazität auf Normalgeschwindigkeit verringert und dadurch die Rücksprungzahl verringert wird. Im Gegensatz zum Lesen des Informationsträgers mit doppelter Geschwindigkeit wird eine Lesegeschwindigkeit im Bereich der einfachen Geschwindigkeit eingestellt, die vorzugsweise die üblich verwendete Normalgeschwindigkeit in Abspielgeräten ohne speziellen Erschütterungsschutz ist, wenn ein vorgegebener Füllstand des Speichers nicht unterschritten wird.

Nur während des Auffüllens des Zwischenspeichers wird eine über die Normalgeschwindigkeit hinausgehende Lesegeschwindigkeit jedoch vorzugsweise ohne Verlust des Bittaktes der Phasenregelung bis zum Erreichen einer vorgegebenen Füllung des Zwischenspeichers verwendet. Ein Rücksetzen bzw. Rückspringen der Abtast- bzw. Leseeinheit ist zum Schaffen der Voraussetzungen für eine Erschütterungsresistenz nicht mehr notwendig, wodurch der Energieverbrauch erheblich verringert wird. Das Erhöhen der Lesegeschwindigkeit ohne Verlust des für die Verarbeitung der Informationen des Informationsträgers erforderlichen Bittaktes wird mit einer Bittakt-PLL ermöglicht, die einen relativ großen Fangbereich aufweist. Dieser Fangbereich beträgt vorzugsweise mehr als ± 60 %. Um ein häufiges Umsteuern der Lesegeschwindigkeit im Zusammenhang mit dem Unter- und Überschreiten eines vorgegebenen Füllstandes des Zwischenspeichers zu verringern und den Energieverbrauch weiter zu senken, werden als vorgegebener Füllstand vorzugsweise ein erster und ein zweiter Füllstand verwendet. Wenn der Zwischenspeicher gefuellt ist, wird ein Umsteuern der Lesegeschwindikeit nur im Erschütterungsfall notwendig, da Einlese- und Auslesegeschwindikeit identisch sind. Bei Normalgeschwindikeit verändert sich der Füllstand. Die Lesegeschwindigkeit wird dann bei Unterschreiten eines ersten Füllstandes beschleunigt und erst bei Erreichen des zweiten Füllstandswertes verringert. Der zweite Füllstandswert wird dabei analog zur Steuerung in Abhängigkeit von nur einem Füllstand derart gewählt, daß der Zwischenspeicher während des Übergangs von einer erhöhten Geschwindigkeit zur einfachen Geschwindigkeit ebenfalls nur bis zu seinem maximalen Fassungsvermögen gefüllt wird. Durch das Verwenden eines ersten und eines zweiten Füllstandswertes entsteht eine Hysterese, die zu einer größeren Laufruhe führt. Die Steueranordnung ist vorzugsweise als Bestandteil des Dekoders ausgeführt und der Zwischenspeicher ist vorzugsweise zwischen dem EFM - Demodulator
( EFM = Eight to fourteen modulation ) und der die digitale Information bereitstellenden De-Interleaving und Fehlerkorrektureinheit angeordnet. Diese Anordnung ermöglicht eine einfache Verarbeitung von Subcode-Informationen, wie beispielsweise Informationen über Zeit und Ort, die dann nur mit einfacher bzw. Normalgeschwindigkeit im Dekoder zu verarbeiten sind und vorteilhaft zur Datensynchronisation verwendet werden können. Es ist keine Dekodierung mit doppelter Geschwindigkeit erforderlich, da der Zwischenspeicher als Zeitbasisausgleichselement wirkt. Der Subcode kann auch mit variabler Lesegeschwindikeit im PLL-Fangbereich gelesen und ausgewertet werden. Die Zeitinformation d.h. Titel- bzw. Diskzeit entsprechend der gerade zu hörenden Musik wird aus dem momentan gelesenen Subcode und dem Füllstand berechnet.

Zur Synchronisation bzw. zum lückenlosen Schreiben von Daten in den Zwischenspeicher könnte auch der bereits bekannte Datenvergleich mit den angegebenen Nachteilen verwendet werden. Es ist jedoch vorteilhaft, zur Synchronisation im Datenstrom vorhandene Subcode-Daten, vorzugsweise das Synchronwort bzw. Synchronbits zu verwenden. Obwohl die Subcode-Daten insbesondere auch durch die an den Füllstand des Zwischenspeichers angepaßte Lesegeschwindigkeit zu unterschiedlichen Zeitpunkten zur Verfügung stehen und nur in größeren Abständen auftreten, wird eine zuverlässige Synchronisation bzw. ein nahtloser Datenanschluß nach einer Unterbrechung dadurch erreicht, daß eine vor der Fehlerkorrektur im Datenstrom den Unterbrechungsort kennzeichnende Adreßinformation verwendet wird. Den Ausgangspunkt der Synchronisation bildet ein gültiger Subcode, dessen Adreßinformation als Referenz sowohl für den Ort der Unterbrechung auf dem Informationsträger als auch für die letzten gültigen Daten im Zwischenspeicher und das Schreiben in den Zwischenspeicher verwendet werden kann. Mit der den Ort einer Unterbrechung auf dem Informationsträger und im Zwischenspeicher kennzeichnenden Adresse können die Synchronisation und das Schreiben in den Zwischenspeicher nach einer Unterbrechung auch bereits vor der Adresse der Unterbrechung durchgeführt werden, da der Abstand zwischen der letzten gueltigen Adresse, die dem Synchronisationsbyte des letzten gültigen Sobcodes entspricht und der neuen Adresse, die dem Synchronisationsbyte des neuen gueltigen Sobcodes entspricht, berechnet werden kann. Die der Adresse folgenden Daten werden dann überschrieben, wodurch eine verkürzte Zeit bis zur Synchronisation erreicht wird. Der Zwischenspeicher ist hierzu vorzugsweise vor der Fehlerkorrektur- und De-Interleavingeinheit angeordnet.

Ein Datenvergleich wird nicht durchgeführt und dennoch zuverlässig trotz variierender Lesegeschwindigkeit ein nahtloser Datenanschluß insbesondere dadurch erreicht, daß der Zwischenspeicher gleichzeitig als Zeitbasisausgleichseinheit dient und Daten mit konstanter Geschwindigkeit aus dem Zwischenspeicher gelesen werden.

Aufgrund der Anordnung des Zwischenspeichers zwischen dem EFM - Demodulator und der die digitale Audioinformation bereitstellenden De-Interleaving und Fehlerkorrektureinheit, kann ein gegenüber einem DRAM kostengünstiger ARAM verwendet werden. Die Verwendung eines ARAM bzw. Audio- RAM , der teilweise fehlerhaft sein kann, wird durch die Anordnung vor der Fehlerkorrektur ermöglicht.

Neben dem Verringern der Rücksprungzahl bzw. der Anzahl der Rückpositionierungen des auch als Pickup bezeichneten Abtast- oder Lesesystems in erschütterungsresistenten Abspielgeräten durch Steuern der Lesegeschwindigkeit des Informationsträgers in Abhängigkeit vom Füllstand des Zwischenspeichers bestehen weitere Aspekte der Erfindung in einer schnellen Verfügbarkeit von Daten zur Wiedergabe nach einem Start und in der Datensynchronisation. Die Anzahl notwendiger Synchronisationen wird bereits durch die geringere Rücksprunganzahl verringert und kann hinsichtlich ihrer Genauigkeit und Zuverlässigkeit weiter erhöht werden.

Zum Verringern des Energieverbrauches von erschütterungsresistenten Abspielgeräten ist weiterhin ein die Energiezufuhr verringerndes Mittel vorgesehen, mit dem zeitweilig die Energiezufuhr zum Antriebsmotor des Informationsträgers unterbrochen oder mindestens verringert wird. Sollte ein feststehender Informationsträger und ein spezielles, die Lesegeschwindigkeit beeinflussendes Antriebsmittel vorgesehen sein, so wäre dessen Energiezufuhr entsprechend zu unterbrechen bzw. zu verringern. Weiterhin wird der Informationsträger im Gegensatz zum grundsätzlichen Lesen mit doppelter Geschwindigkeit nur zum Auffüllen des Zwischenspeichers mit einer erhöhten Geschwindigkeit gelesen und dennoch zuverlässig die bekannte Erschütterungsresistenz erreicht. Da ein Auffüllen des Zwischenspeichers nur nach einem Neustart oder nach einer erschütterungsbedingte Unterbrechung erforderlich ist, kann der Informationträger überwiegend mit einfacher Lesegeschwindigkeit, die der Normalgeschwindigkeit entspricht, gelesen bzw. angetrieben werden. Das Betreiben mit Normalgeschwindigkeit führt bereits zu einem erheblich verringerten Energieverbrauch, da einerseits die Motordrehzahl entsprechend geringer ist und zusätzlich Steurungen und Bewegungen des Abtastsystems zum Auffinden des Abtastortes nach der Unterbrechung infolge der Gefahr des Überlaufens des Zwischenspeichers durch das Schreiben mit doppelter und das Lesen mit einfacher Geschwindigkeit entfallen. Zum Verringern der Drehzahl wird nicht nur die Referenzfrequenz bzw. der Drehzahlsollwert in dem bekannten CLV-Regelkreis verringert, was infolge einer sogenannten harten Drehzahlumsteuerung, ebenfalls noch einen hohen Energieverbrauch erfordern würde, sondern es ist vorgesehen, die Energiezufuhr zum Antriebsmotor zu unterbrechen oder zumindest wesentlich zu verringern. Das hierzu vorgesehene Mittel ist vorzugsweise ein in der Stromzuführung zum Antriebsmotor vorgesehener elektronischer Schalter.

Mit der in einem vorgegebenen Bereich veränderbaren Referenzsignalquelle zur Drehzahlregelung des Antriebsmotors wird die Abtastgeschwindigkeit in Abhängigkeit vom Füllstand des Zwischenspeichers derart gestellt, daß ein Schreiben bzw. Einlesen von Daten in den Zwischenspeicher mit gegenüber der Auslesegeschwindigkeit aus dem Zwischenspeicher erhöhter Geschwindigkeit nur dann vorgesehen wird, wenn der Füllstand des Zwischenspeichers zum Startzeitpunkt des Abspielvorgangs oder infolge eines Spurverlustes einen vorgegebenen Wert unterschreitet. Während der Zeiträume, in denen kein Spurverlust auftritt und der Zwischenspeicher einen vorgegebenen Füllstand aufweist, wird der Informationsträger lediglich mit einfacher Geschwindigkeit angetrieben. Durch diese Art der Drehzahlregelung erfolgt das Einlesen von Abtastdaten in den Zwischenspeicher nicht mehr mit konstanter Geschwindigkeit bzw. konstanter Frequenz. Dennoch wird die Informationswiedergabe nicht gestört, wenn ein Phasenregelkreis bzw. eine sogenannte PLL mit großem Fangbereich vorgesehen wird.

Das Variieren der Lesegeschwindigkeit ohne Verlust des für die Verarbeitung der Informationen des Informationsträgers erforderlichen Bittaktes wird mit einer Bittakt-PLL ermöglicht, die einen relativ großen Fangbereich aufweist. Dieser Fangbereich sollte vorzugsweise mehr als ± 60 % betragen. Deshalb wird das Wiedergabesignal bzw. die Informationswiedergabe von Schwankungen der Lesegeschwindigkeit bzw. der Drehzahl des Informationsträgerantriebsmotors bei entsprechend großem Fangbereich im Bereich von beispielweise 80% bis 180% des Normalwertes nicht beeinflußt. Dieser große Fangbereich, der unter anderem auch auf die bei der Datenspeicherung bzw. Datenrückgewinnung verwendete Eight to Fourteen Modulation zurückzuführen ist, erlaubt das Einlesen von Daten in den Zwischenspeicher mit unterschiedlicher Geschwindigkeit, so daß die Drehzahl des Informationsträgerantriebsmotors innerhalb des Fangbereiches der PLL zum Verringern des Energieverbrauchs variiert werden kann. Da die Drehzahl des Antriebsmotors nach dem Erreichen eines vorgegebenen Füllstandes des Zwischenspeichers auf einfache Geschwindigkeit zurückgeführt werden kann, ist für den Zeitraum bis zum Erreichen der einfachen Geschwindigkeit oder eines vorgegebenen Geschwindigkeitswertes, der auch geringer als die einfache Geschwindigkeit sein kann, vorzugsweise eine vollständige Abtrennung des Antriebsmotors von der Stromversorgung zum verringern des Energieverbrauchs vorgesehen. Diese Abtrennung wird dadurch erreicht, daß die Verbindung hochohmig gemacht wird. Das dadurch erreichte, sogenannte weiche Umsteuern der Drehzahl des Antriebsmotors führt im Zusammenhang mit dem Verringern der doppelten Geschwindigkeit zur Normalgeschwindigkeit zu einem erheblich verringerten Energieverbrauch, der einen erheblich längeren Betrieb des Abspielgerätes mit einem Batteriesatz ermöglicht.

Obwohl die vorstehenden Ausführungen im wesentlichen auf eine CD als Informationsträger bezogen wurden, so wird das Anwendungsgebiet dadurch nicht eingeschränkt, da grundsätzlich alle digitalen Signalspeicher bzw. Informationsträger, wie beispielsweise auch die digitale Bildplatte oder digitale Bänder, eine vergleichsweise ähnliche Datenstruktur aufweisen, die eine Anwendung des der Erfindung zugrunde liegenden Prinzips ermöglicht.

Nachfolgend wird die Erfindung anhand von Zeichnungen näher erläutert.

Es zeigen:
- Fig. 1: Blockschaltbild des erschütterungsresistenten Abspielgeräts mit verbesserter Steuerung ,
- Fig.2: Ablaufdiagramm zur Steuerung des erschütterungsresistenten Abspielgeräts,
- Fig. 3: Blockschaltbild eines bekannten erschütterungsresistenten Abspielgeräts,
- Fig. 4: Ablaufdiagramm zur Steuerung des verbesserten erschütterungsresistenten Abspielgeräts in Abhängigkeit von zwei Füllstandswerten,
- Fig. 5: Blockschaltbild des erschütterungsresistenten Abspielgeräts mit verringertem Energieverbrauch,
- Fig. 6: Blockschaltbild zur Steuerung des erschütterungsresistenten Abspielgeräts gemäß Fig. 5,
- Fig. 7: Blockschaltbild zur Steuerung des bekannten erschütterungsresistenten Abspielgeräts gemäß Fig. 3, und
- Fig. 8: Ablaufdiagramm zur Steuerung des verbesserten erschütterungsresistenten Abspielgeräts mit verringertem Energieverbrauch.

Übereinstimmende Bezugszeichen werden in den Zeichnungen einheitlich verwendet.

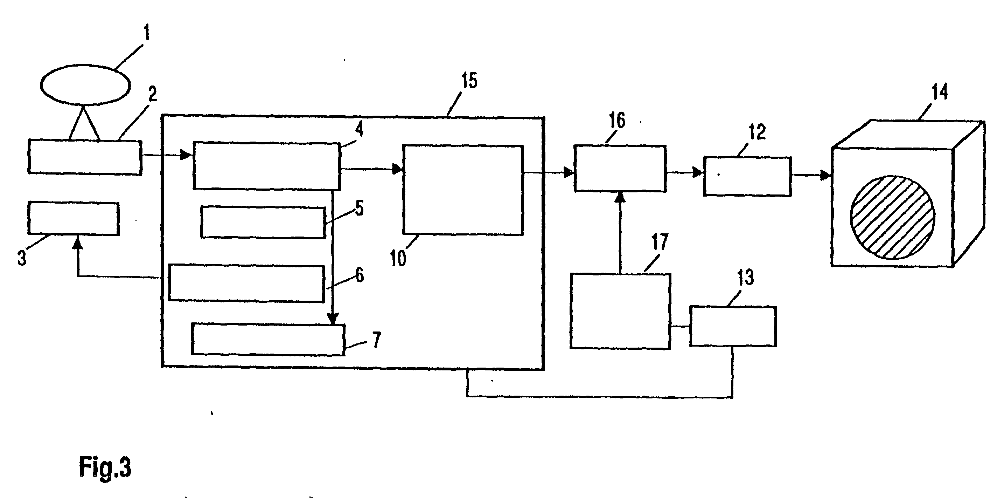

Das bekannte erschütterungsresistente Abspielgerät gemäß Fig.3 weist zum Überbrücken von Unterbrechungen des Lesevorgangs vom Informationsträger 1 einen Zwischenspeicher 16 auf, der an einem eine Fehlerkorrektur- und De-Interleavingeinheit 10 enthaltenden Dekoder 15 angeschlossen ist. Der Zwischenspeicher 16 ist unmittelbar vor dem Digital/Analog Wandler 12, der mit einer Wiedergabeeinrichtung 14 verbunden ist, angeordnet und mit einer Steuereinheit 17 verbunden, die am Mikroprozessor 13 des erschütterungsresistenten Abspielgerätes angeschlossen ist. Um auch während einer Unterbrechung des Lesevorgangs vom Informationsträger 1 durch Erschütterungen eine störungsfreie bzw. ununterbrochene Informationswiedergabe zu gewährleisten, werden vom Informationsträger 1 gelesene Daten mit doppelter Geschwindigkeit in den Zwischenspeicher 16 geschrieben und mit einfacher Geschwindigkeit ausgelesen. Dadurch wird erreicht, daß im Zwischenspeicher 16 stets eine ausreichende Datenmenge zum kurzzeitigen Überbrücken von Unterbrechungen des Lesevorgangs vom Informationsträger 1 vorhanden ist und der Zwischenspeicher 16 nach einer Unterbrechung des Lesevorgangs, die den Zwischenspeicher 16 leert, wieder mit Daten gefüllt wird, um für eine erneute Unterbrechung vorbereitet zu sein. Der Informationsträger 1 wird zum Lesen mit doppelter Geschwindigkeit von einem Motor 3 angetrieben, der mit zweifacher Drehzahl betrieben wird und an einem CLV-Servo 6 angeschlossen ist . Mit dem CLV-Servo 6 wird die Drehzahl des Motors 3, die beim bekannten Abspielgerät grundsätzlich auf das Zweifache erhöht ist, zum Erreichen einer annähernd konstanten Lesegeschwindigkeit in Abhängigkeit vom Abtastradius variiert. Dieses Variieren der Drehzahl erfolgt in dem für die konstante Lesegeschwindigkeit üblichen Rahmen und nicht in Abhängigkeit vom Füllstand des Zwischenspeichers 16.

Die auf dem Informationsträger 1 gespeicherten Informationen werden mit einem die Abtasteinrichtung 2 bildenden Pickup detektiert und einer Impulsform- und EFM-Demodulatoreinheit 4 zugeführt. Mit der Impulsform- und EFM-Demodulatoreinheit 4 werden insbesondere das vom Informationsträger 1 kommende und noch verschliffene Digitalsignal in ein einigermaßen digitales Signal umgeformt und der für die weitere Bearbeitung der Informationen erforderliche Takt erzeugt. Die EFM (Eight to Fourteen Modulation) ist dabei insbesondere vorgesehen, um auch bei leisen Stellen oder Pausen, bei denen keine Wechsel der einzelnen Bits zwischen ihren möglichen Zuständen auftreten, eine zuverlässige Taktrückgewinnung zu ermöglichen. Hierzu dient insbesondere eine sogenannte Bittakt-PLL 5. Weiterhin sind im Dekoder 15 ein die im Subcode enthaltenen Zusatzinformationen entschlüsselnder Subcode-Dekoder 7 sowie eine Fehlerkorrektur- und De-Interleavingeinheit 10, mit der bei einem CD-Spieler das digitale Audiosignal bereitgestellt wird, vorgesehen. Dieser Fehlerkorrektur- und De-Interleavingeinheit 10 ist bei dem bekannten erschütterungsresistenten Abspielgerät gemäß Fig.3 ein als DRAM ausgeführter Zwischenspeicher 16 nachgeschaltet. Die im Zwischenspeicher 16 zum Überbrücken einer Unterbrechung des Lesens von Informationen vom Informationsträger 1 gespeicherten Audio-Daten werden dann über einen Digital/Analog - Wandler 12 der Wiedergabeeinrichtung 14 zugeführt. Zur Organisation des Zwischenspeichers 16 bzw. zum Schreiben und Auslesen von Daten in und aus dem Zwischenspeicher 16 ist eine auch als Shock Proof Memory Controller bezeichnete Steuereinheit 17 vorgesehen, die mit einem die Steuerung und Datenauswertung des Abspielgerätes organisierenden Mikroprozessor 13 verbunden ist. Mit dem bekannten Verfahren werden bis zu einer Unterbrechung des Lesens von Informationen vom Informationsträger 1 infolge einer Erschütterung oder bei Erreichen des maximalen Füllstandes des Zwischenspeichers 16 Audio-Daten in den Zwischenspeicher 16 geschrieben. Nach einer Unterbrechung werden dann die Abtasteinrichtung 2 an einen der letzten gültigen Subcodeadresse entsprechenden Abtastort zurückgesetzt und das Lesen des Informationsträgers 1 fortgesetzt. Da die Abtastwerte nach der Fehlerkorrektur und dem De-Interleaving im Zwischenspeicher 16 jedoch nicht abtastwert-genau vorliegen bzw. keine die Adresse der Unterbrechung kennzeichnende Information vorhanden ist, muß ein Vergleich zwischen erneut gelesenen Audio-Daten und im Zwischenspeicher 16 vorhandenen Audio-Daten bis zu einer Übereinstimmung durchgeführt werden. Mit dem Feststellen der Übereinstimmung wird dann das Schreiben von gelesenen Daten in den Zwischenspeicher 16 fortgesetzt. Bei sehr leisen Informationsabschnitten, einer Stummschaltung infolge sehr hoher Fehlerrate oder bei Wiederholungen mit gleichem Informationsinhalt führt ein derartiger Vergleich jedoch an unterschiedlichen Orten zu einer Übereinstimmung, die nicht der auf dem Informationsträger 1 gespeicherten Informationsfolge entspricht.

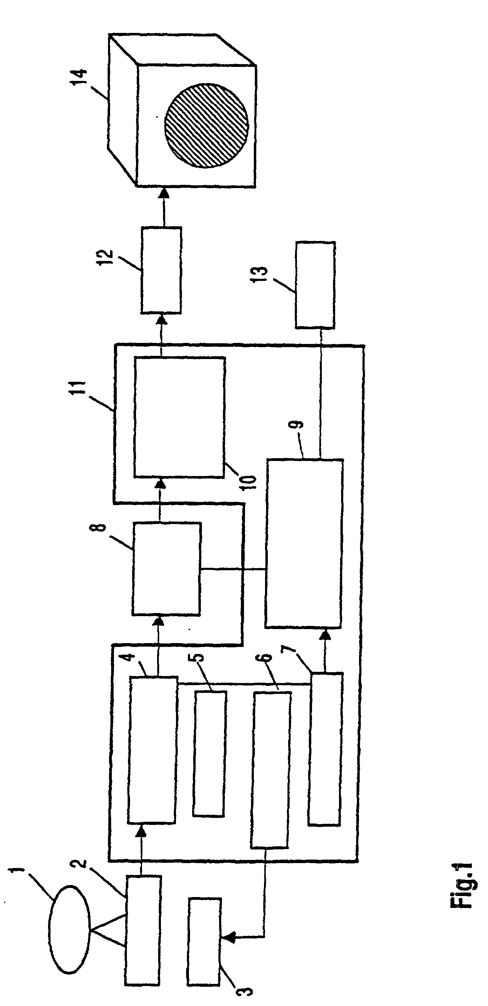

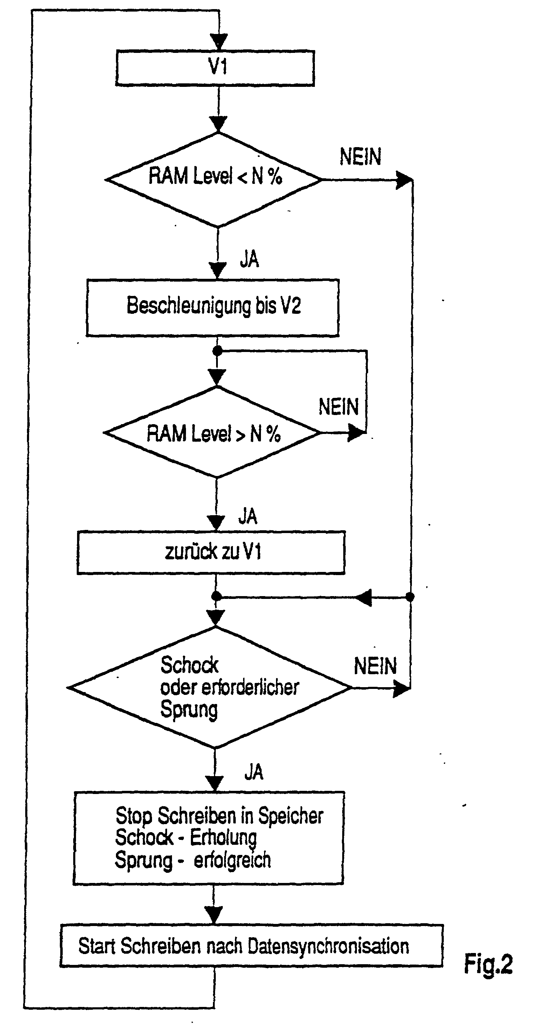

Gegenüber dem bekannten erschütterungsresistenten Abspielgerät wurden sowohl das Verfahren als auch die Anordnung Fig.1 und Fig. 2 entsprechend verändert. Es ist ein wesentlicher Aspekt des erschütterungsresistenten Abspielgerätes mit verbesserter Steuerung, daß die Lesegeschwindigkeit vom Informationsträger 1 mit einer Steuereinheit 9 in Abhängigkeit von einem vorgegebenen Füllstand des Zwischenspeichers gesteuert wird, der Fig. 1 entsprechend vorzugsweise als Zwischenspeicher 8 vor der Fehlerkorrektur- und De-Interleavingeinheit 10 angeordnet ist. Das erschütterungsresistente Abspielgerät gemäß Fig.1 arbeitet somit nicht mit einer konstanten doppelten Lesegeschwindigkeit. Es wird Fig.2 entsprechend überwiegend eine erste Lesegeschwindigkeit V1 verwendet, die der üblichen Normalgeschwindigkeit in Abspielgeräten ohne besonderen Erschütterungsschutz und damit auch der Geschwindigkeit entspricht, mit der Daten zur Informationswiedergabe aus einem Zwischenspeicher 8 bzw. 16 ausgelesen werden. Diese erste Lesegeschwindigkeit V1 wird auf eine zweite Lesegeschwindigkeit V2 nur während des Auffüllens des Zwischenspeichers 8 oder 16 bis zu einem vorgegebenen Füllstandswert N% erhöht, der geringer als das maximale Speichervolumen des Zwischenspeichers 8 bzw. 16 ist. Der Füllstandswert N wird derart gewählt, daß der Zwischenspeicher 8 während des Übergangs von der erhöhten zweiten Lesegeschwindigkeit V2 zur ersten Lesegeschwindigkeit V1 nur bis zu seinem maximalen Speichervolumen gefüllt wird und nicht überläuft. Da erst die Lesegeschwindigkeit V1 der Geschwindigkeit entspricht, mit welcher der Zwischenspeicher 8 ausgelesen wird, steigt die Menge gespeicherter Daten auch noch während des Übergangs zur Normalgeschwindigkeit an. Für diesen Anstieg des Füllstandes ist die Differenz zwischen dem vorgegebenen Füllstandswert N% und der maximalen Speicherkapazität vorgesehen. Als maximale zweite Lesegeschwindigkeit V2 wird vorzugsweise eine zweite Lesegeschwindigkeit V2 gewählt, die innerhalb des Fangbereiches der Bittakt-PLL 5 liegt. Dieser Fangbereich sollte mehr als ± 60 % betragen, wenngleich ein bekannter SONY Decoder CXD2500 nur einen Fangbereich von +/- 4% aufweist, so daß die zweite Lesegeschwindigkeit V2 zu 180% von der ersten Lesegeschwindigkeit V1 gewählt werden kann, um ein schnelles Auffüllen des Zwischenspeichers 8 bzw. 16 zu gewährleisten. Die zweite Lesegeschwindigkeit V2 wird vorzugsweise innerhalb des Fangbereiches der Bittakt-PLL 5 gewählt, um trotz des Veränderns der Lesegeschwindigkeit V1 eine zur Signalverarbeitung erforderliche Bittaktrückgewinnung und das Schreiben in den Zwischenspeicher 8 bzw. 16 ohne Unterbrechung zu ermöglichen. Der Füllstandswert N% des Zwischenspeichers 8 bzw. 16, bei dem die Umschaltung zwischen den Lesegeschwindigkeiten V1, V2 zum Verhindern eines Überlaufs des Zwischenspeichers 8 bzw. 16 vorzunehmen ist, wird entscheidend vom Übergangsverhalten des Abspielgerätes zwischen den Geschwindigkeiten V1 und V2 bestimmt und kann beispielsweise 80% des maximalen Speichervolumens des Zwischenspeichers 8 bzw. 16 betragen. Das maximale Speichervolumen des Zwischenspeichers 8 bzw. 16 bestimmt dabei die Zeit, die während des Auftretens von Erschütterungen störungsfrei überbrückt werden kann. Ein diesem Verfahren entsprechendes Ablaufdiagramm ist in Fig 2 dargestellt. Diesem Ablaufdiagramm entsprechend wird während des Lesens des Informationsträgers 1 mit der ersten Lesegeschwindigkeit V1 der Füllstand des Zwischenspeichers 8 bzw. 16 überprüft. Hierzu wird der als RAM Level bezeichnete aktuelle Füllstand des Zwischenspeichers 8 bzw. 16 mit einem vorgegebenen Füllstand N, der ein prozentualer Wert N% des maximalen Speichervolumens des Zwischenspeichers 8 ist, verglichen. Ist der als RAM Level bezeichnete aktuelle Füllstand des Zwischenspeichers 8 kleiner als der vorgegebene Füllstandswert N%, wird der Lesevorgang bis zur zweiten Lesegeschwindigkeit V2 beschleunigt. Die zweite Lesegeschwindigkeit V2 wird dann so lange beibehalten, bis der als RAM Level bezeichnete aktuelle Füllstand des Zwischenspeichers 8 größer als der vorgegebene Füllstandswert N% ist. Übersteigt der als RAM Level bezeichnete aktuelle Füllstand des Zwischenspeichers 8 den vorgegebene Füllstandswert N%, wird die Lesegeschwindigkeit V2 vorzugsweise bis zur ersten Lesegeschwindigkeit V1 verringert. Dadurch wird erreicht, daß sich der aktuelle Füllstand RAM Level nur noch mit sinkender Geschwindigkeit erhöht und bei Erreichen der ersten Lesegeschwindigkeit V1 nicht weiter ansteigt, da bei dieser Geschwindigkeit Schreib- und Auslesegeschwindigkeit übereinstimmen. Der Füllstandswert N% wird derart gewählt, daß unter Berücksichtigung dieses Übergangsverhaltens die maximale Speicherkapazität des Zwischenspeichers 8 nicht überschritten wird. Der konkrete Füllstandswert N% ist sowohl von der Höhe der zweiten Lesegeschwindigkeit V2 als auch von der Geschwindigkeit der Umsteuerung zwischen den Geschwindigkeiten, die von der Trägheit des Systems beeinflußt wird, abhängig und kann beispielsweise 80% der maximalen Speicherkapazität des Zwischenspeichers 8 bzw. 16 betragen.

Die erste Lesegeschwindigkeit V1 ist vorzugsweise gleich der zur Informationswiedergabe verwendeten Geschwindigkeit und die zweite Lesegeschwindigkeit V2 ist vorzugsweise gegenüber der ersten Lesegeschwindigkeit um 80% erhöht.

Ist der aktuelle Füllstand RAM Level nicht geringer als der vorgegebene Füllstandswert N% wird ein grundsätzlich vom Mikroprozessor 13 bereitgestelltes Signal ausgewertet, das eine Information darüber darstellt, ob beispielsweise eine Erschütterung oder ein sogenannter Schock aufgetreten ist und das Schreiben in den Zwischenspeicher 8 bzw. 16 zu stoppen ist oder aufgrund eines Bedienerbefehls ein anderer Speicherort auf dem Informationsträger 1 anzuspringen ist. Nach einer Schockerholung bzw. Rückstellung der Abtasteinrichtung 2 und erfolgreichem Sprung wird dann das Schreiben in den Zwischenspeicher 8 nach erfolgter Datensynchronisation fortgesetzt. Schock kann auch detektiert und bearbeitet bzw. korrigiert werden, wenn der Füllstand = N% noch nicht erreicht ist. Die zur Korrektur verfügbare Zeit ist vom aktuellen Fuellstand abhängig.

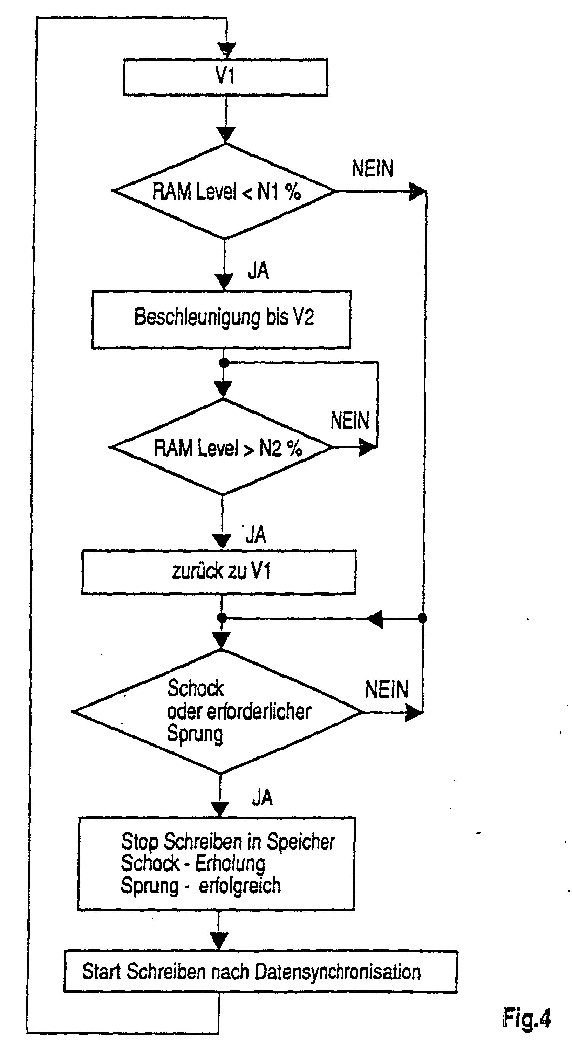

Einer zweiten Ausführung entsprechend, die in Fig. 4 dargestellt ist, werden als vorgegebener Füllstandswert N% ein erster Füllstandswert N1 und ein zweiter Füllstandswert N2 verwendet, wobei der zweite Füllstandswert N2 größer als der erste Füllstandswert N1 ist. Hinsichtlich aller anderen Bestandteile und des prinzipiellen Ablaufs sind Fig.4 und Fig 2 identisch, so daß sich die Ausführungen auf deren Unterschied beschränken können. Das Verwenden eines ersten und eines zweiten vorgegebenen Füllstandswertes N1,N2 zum Steuern der Lesegeschwindigkeit in erschütterungsresistenten Abspielgeräten ist insbesondere hinsichtlich einer geringeren Anzahl von Umsteuerungen zwischen den Lesegeschwindigkeiten V1,V2 vorteilhaft. Mit einem ersten und einem zweiten vorgegebenen Füllstandswert N1,N2 zum Steuern der Lesegeschwindigkeit wird eine der Differenz der Füllstandswerte N1,N2 entsprechende Hysterese gebildet, die dazu führt, daß von der ersten Lesegeschwindigkeit V1 zur zweiten Lesegeschwindigkeit V2 erst bei einem unteren Füllstandswert N1 beschleunigt und die Lesegeschwindigkeit V2 erst bei Überschreiten oder ab einem vorgegebenen oberen Füllstandswert N2 auf die erste Lesegeschwindigkeit V1 verringert wird. Unter vergleichbaren Bedingungen sinkt dadurch die Anzahl der Umsteuerungen, es wird eine größere Laufruhe erreicht und gleichzeitig der Energieverbrauch weiter gesenkt.

Neben dem Verringern der Rücksprungzahl und dem Senken des Energieverbrauchs ist die Synchronisation bzw. das nahtlose Schreiben von Daten in den Zwischenspeicher 8 entsprechen der auf dem Informationsträger 1 gespeicherten Information nach einer Unterbrechung ein weiterer Aspekt.

Obwohl die vorgenannten Ausführungsbeispiele bezüglich der Synchronisation mit dem bekannten Synchronisationsverfahren, das auf dem Vergleich von Audio- bzw. Wiedergabeinformationsdaten beruht, kombiniert werden können, wird eine weitere Ausführung angegeben, mit der die Zuverlässigkeit der Synchronisation weiter erhöht werden kann. Es sei erwähnt, daß die Anzahl der notwendigen Synchronisationen bereits durch eine geringere Anzahl von Rücksetzungen der Abtasteinrichtung 2 verringert wird, die durch das Verhindern des Überlaufs des Zwischenspeichers 8 bzw. 16 erreicht wird. Da das Schreiben in den Zwischenspeicher 8 bzw. 16 nur noch bei einer durch Schock oder Erschütterungen bedingten Unterbrechung des Lesens vom Informationsträger 1 unterbrochen wird, wird bereits eine höhere Zuverlässigkeit der bekannten Synchronisation erreicht, die jedoch durch eine andere Art der Synchronisation weiter erhöht werden kann. Die bereits in den vorgenannten Ausführungen erwähnte Steuereinheit 9 zum Steuern der Lesegeschwindigkeit V1,V2 des Informationsträgers 1 in Abhängigkeit vom vorgegebenen Füllstand des Zwischenspeichers 8 bzw. 16 ist vorzugsweise als Bestandteil des Dekoders 11 des Abspielgerätes ausgeführt, wodurch vorteilhaft vom Informationsträger 1 detektierte Subcodeinformationen zur Signalverarbeitung und Steuerung des erschütterungsresistenten Abspielgerätes verwendet werden können. Einen ersten Beitrag liefert das Verwenden von Lesegeschwindigkeiten V1,V2 innerhalb des Fangbereiches der Bittakt-PLL 5, wodurch ein ununterbrochenes Schreiben von Daten in den Zwischenspeicher 8 bzw.16 trotz Veränderung der Lesegeschwindigkeit ermöglicht wird.

Weiterhin ist der Zwischenspeicher 8 der in Fig. 1 dargestellten Ausführung entsprechend zwischen einer Impulsform- und EFM-Demodulatoreinheit 4 und der Fehlerkorrektur- und De-Interleavingeinheit 10 angeordnet. Diese Anordnung des Zwischenspeichers 8 ermöglicht in vorteilhafter Weise das Verwenden von Adreßinformationen zur Synchronisation. Obwohl die in Subcodeinformationen vorhandenen Adreßinformationen nur in großen Abständen auftreten und die Lesegeschwindigkeit zeitweilig verändert wird, ist ihre Verwendung aufgrund der vom Zwischenspeicher 8 ausgehenden Zeitbasisausgleichsfunktion möglich. Den Ausgangspunkt dieser Synchronisation bildet ein gültiger Subcode, dessen Adreßinformation als Referenz sowohl für den Ort der Unterbrechung auf dem Informationsträger 1 als auch für die letzten gültigen Daten im Zwischenspeicher 8 und das Schreiben in den Zwischenspeicher 8 verwendet werden kann.

Immer wenn ein gültiger Subcode auftritt, d.h. wenn die CIRC-Prüfung keinen Fehler signalisierte, gibt der den Subcode auswertende Mikroprozessor 13 der Steuereinheit 9 die Information, daß der letzte Subcode gültig war. Bei der CIRC-Prüfung handelt es sich um einen von Sony entwickelten Fehlerkorrekturcode, wobei CIRC die Abkürzung für Cross interleave reed solomon code darstellt. In der Steuereinheit 9 wird stets die erste Adresse des Subcodes abgespeichert, d.h. die Adresse der Synchronbyts SO,S1. Damit ist ein Ort der vom Informationsträger 1 gelesenen Daten lokalisiert. Nachdem die Steuereinheit 9 die Information über das Vorliegenden eines gültigen Subcodes erhalten hat, wird die Adresse vorzugsweise in einem Register der Steuereinheit abgespeichert. Dieser abgespeicherte Wert bildet dann die Referenz, wenn eine Erschütterung auftritt. Wenn eine Erschütterung oder ein sogenannter Schock auftritt, ist dadurch die letzte gültige Adresse in der Steuereinheit 9 abgespeichert. Es liegen somit Informationen darüber vor, an welcher Stelle auf dem Informationsträger eine Unterbrechung stattgefunden hat und welche Adresse noch gültig war, bei der in den Zwischenspeicher 8 geschrieben wurde. Nach der Unterbrechung durch einen Schock wird die Abtast- bzw. Leseeinheit an einen Ort des Informationsträgers 1 vor der Unterbrechung zurückgeführt.

Dieser Ort kann der letzte gültige Ort oder ein Ort an der Stelle mehrerer Subcodes vor der Unterbrechung sein. Wird die Abtasteinrichtung 2 beispielsweise an einen Ort geführt, der fünf Subcodes vor der Unterbrechung lag, so ist bekannt, daß der Schock fünf Subcodes später auftrat , von dem die Adresse aufgrund der Speicherung in der Steuereinheit 9 bekannt ist.

Von dieser Adresse ausgehend wird dann eine Adresse von in diesem Beispiel fünfmal die Anzahl der Bytes zwischen den Subcodes zurück berechnet, so daß der Ort im Zwischenspeicher 8 lokalisiert ist, ab dem der bisherige Zwischenspeicherinhalt überschrieben werden kann.

Andererseits besteht die Möglichkeit bis zu dem Subcode zu fahren, bei dem der Schock aufgetreten ist, und kann mit der gespeicherten Adresse gestartet werden.

Mit dem erneuten Schreiben wird stets ab einem Synchronbyte begonnen, auch wenn nachfolgend noch andere gültige Daten vorhanden sein sollten. Dieses Synchronisieren auf eine absolute Adresse gewährleistet eine absolut zuverlässige Synchronisation, wodurch ein zeitlicher Versatz grundsätzlich ausgeschlossen ist.

Mit der den Ort einer Unterbrechung auf dem Informationsträger 1 und im Zwischenspeicher 8 kennzeichnenden Adresse können die Synchronisation und das Schreiben in den Zwischenspeicher 8 nach einer Unterbrechung auch bereits vor der Adresse der Unterbrechung durchgeführt werden, da der Abstand zwischen der erneut gelesenen Adresse und der gespeicherten Adresse der Unterbrechung berechnet werden kann. Die der Adresse folgenden Daten werden dann überschrieben, wodurch ein Verkürzen der Zeit bis zur Synchronisation erreicht wird. Obwohl die vorstehenden Ausführungen zur Synchronisation im wesentlichen auf einen Informationsträger 1 in Form einer CD bezogen wurden, so wird das Anwendungsgebiet dadurch nicht eingeschränkt, da grundsätzlich alle digitalen Signalspeicher bzw. Informationsträger, wie beispielsweise auch die digitale Bildplatte oder digitale Bänder, eine vergleichsweise ähnliche Datenstruktur aufweisen, die eine Anwendung des dargestellten Prinzips ermöglicht. Die Anwendung ist somit auch im Zusammenhang mit magnetischen oder mechanischen Abtasteinrichtungen sowie bandförmigen und anderen flächenhaften Informationsträgern möglich.

Aufgrund der Anordnung des Zwischenspeichers 8 zwischen dem EFM - Demodulator 4 und der die digitale Audioinformation bereitstellenden De-Interleaving und Fehlerkorrektureinheit 10, kann als Zwischenspeicher 8 ein gegenüber einem DRAM kostengünstiger ARAM verwendet werden. Die Verwendung eines ARAM bzw. Audio- RAM, der teilweise fehlerhaft sein kann, als Zwischenspeicher 8, mit dem auch die Synchronisation nach einer Unterbrechung durchgeführt wird, wird durch die Anordnung vor der Fehlerkorrektureinheit 10 ermöglicht.

Ein weiterer Aspekte besteht in einer schnellen Verfügbarkeit von Daten zur Wiedergabe nach einem Start des Abspielgerätes.

Wird das vorgestellte erschütterungsresistente Abspielgerät gestartet, stehen bereits bei Erreichen der Normalgeschwindigkeit, die der einfachen bzw. ersten Lesegeschwindigkeit V1 entspricht, Daten des Informationsträgers 1 im Zwischenspeicher 8 bzw. 16 zur Wiedergabe zur Verfügung und die Wiedergabe muß nicht bis zum Beschleunigen auf die zweifache Lesegeschwindigkeit des bekannten Abspielgerätes verzögert werden, wodurch als weiterer Vorteil eine kürzere Zugriffszeit erreicht wird.

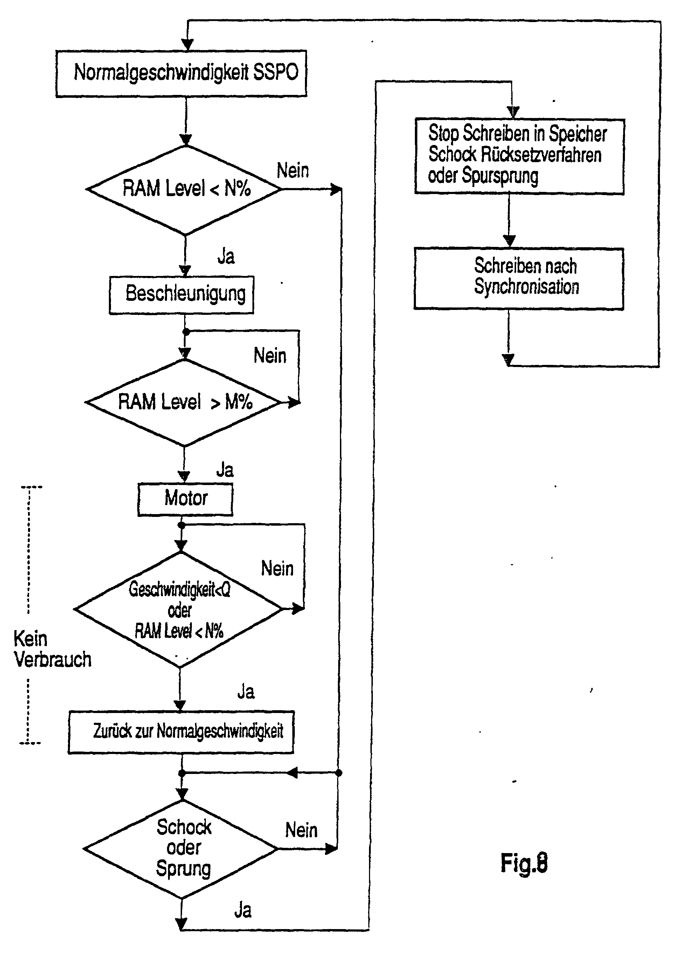

Fig. 7 zeigt ein Blockschaltbild zur Steuerung des bekannten erschütterungsresistenten Abspielgeräts gemäß Fig. 3 insbesondere die Drehzahlregelung des Antriebsmotors M betreffend. Zum Lesen des Informationsträgers 1 mit konstanter Lesegeschwindigkeit wird eine konstante Referenzfrequenz FR verwendet, die in einem Summierpunkt + mit einer Geschwindigkeitsinformation SPI zum Bilden eines Fehlersignals ES verglichen wird. Die konstante Referenzfrequenz FR entspricht bei dem bekannten erschütterungsresistenten Abspielgerät der doppelten normalen Lesegeschwindigkeit bzw. der doppelten Geschwindigkeit, mit welcher der Zwischenspeicher 16 zur Informationswiedergabe ausgelesen wird, um nach einer Unterbrechung des Schreibens in den Zwischenspeicher 16, diesen möglichst schnell wieder aufzufüllen. Die aktuelle Geschwindigkeitsinformation SPI des Antriebsmotors M des Informationsträgers 1wird aus der Bittaktfrequenz des vom Informationsträger 1 gelesenen Datenstroms abgeleitet, so daß die Drehzahl DSPO des Antriebsmotors M einer konstanten, doppelten Lesegeschwindigkeit entspechend geregelt wird. Hierzu ist eine Steuerung CLV Servo Controller vorgesehen, die mit dem Mikroprozessor MPU bzw. 13 und einem Treiber D, der den Antiebsmotor M steuert, verbunden ist. Die Drehzahl DSPO des Antriebsmotors M entspricht dabei der doppelten Drehzahl, die zum Lesen mit Normalgeschwindigkeit erforderlich wäre.

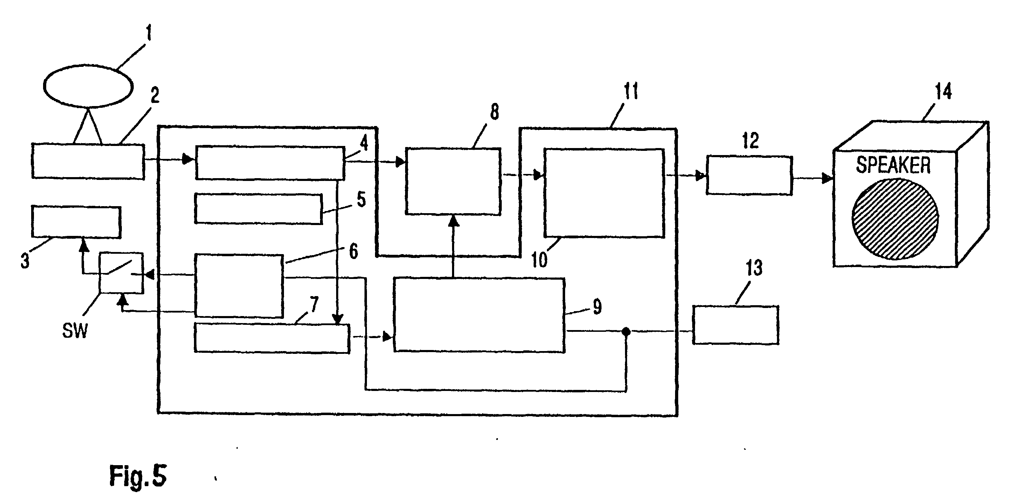

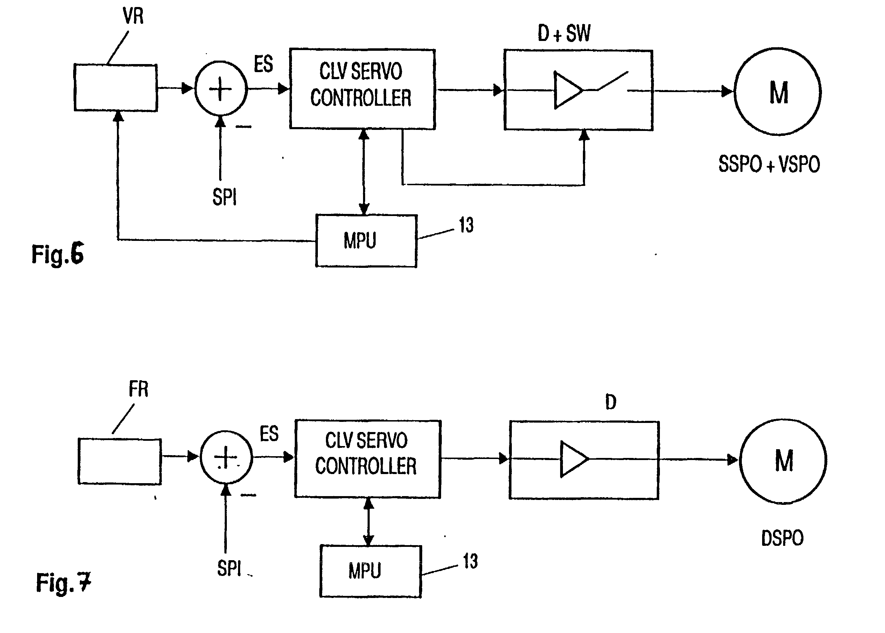

Gegenüber dem bekannten erschütterungsresistenten Abspielgerät wurden sowohl das Verfahren als auch die Anordnung Fig. 5, Fig. 6 und Fig. 8 entsprechend verändert. Es ist ein Aspekt des erschütterungsresistenten Abspielgerätes mit verringertem Energieverbrauch, daß die Lesegeschwindigkeit vom Informationsträger 1 mit einer Steueranordnung 9 in Abhängigkeit von einem vorgegebenen Füllstand des Zwischenspeichers gesteuert wird, der Fig. 5 entsprechend vorzugsweise als Zwischenspeicher 8 vor der Fehlerkorrektur- und De-Interleavingeinheit 10 angeordnet ist. Das erschütterungsresistente Abspielgerät gemäß Fig. 5 arbeitet somit nicht mit einer konstanten doppelten Lesegeschwindigkeit. Es wird Fig. 6 und Fig. 8 entsprechend überwiegend eine erste Lesegeschwindigkeit SSPO verwendet, die der üblichen Normalgeschwindigkeit in Abspielgeräten ohne besonderen Erschütterungsschutz und damit auch der Geschwindigkeit entspricht, mit der Daten zur Informationswiedergabe aus einem Zwischenspeicher 8 bzw. 16 ausgelesen werden. Diese erste Lesegeschwindigkeit SSPO wird auf eine zweite Lesegeschwindigkeit VSPO nur während des Auffüllens des Zwischenspeichers 8 oder 16 bis zu einem vorgegebenen Füllstandswert N% erhöht, der vorzugsweise geringer als das maximale Speichervolumen des Zwischenspeichers 8 bzw. 16 ist. Der Füllstandswert N wird derart gewählt, daß der Zwischenspeicher 8 während des Übergangs von der erhöhten zweiten Lesegeschwindigkeit VSPO zur ersten Lesegeschwindigkeit SSPO nur bis zu seinem maximalen Speichervolumen gefüllt wird und nicht überläuft. Da erst die erste Lesegeschwindigkeit SSPO der Geschwindigkeit entspricht, mit welcher der Zwischenspeicher 8 ausgelesen wird, steigt die Menge gespeicherter Daten auch noch während des Übergangs zur Normalgeschwindigkeit an. Für diesen Anstieg des Füllstandes ist die Differenz zwischen dem vorgegebenen Füllstandswert N% und der maximalen Speicherkapazität vorgesehen.

Als maximale zweite Lesegeschwindigkeit VSPO wird vorzugsweise eine zweite Lesegeschwindigkeit VSPO gewählt, die innerhalb des Fangbereiches der Bittakt-PLL 5 liegt. Dieser Fangbereich sollte mehr als ± 60 % betragen, wenngleich ein bekannter SONY Decoder CXD2500 nur einen Fangbereich von +/- 4% aufweist, so daß die zweite Lesegeschwindigkeit VSPO zu 180% von der ersten Lesegeschwindigkeit SSPO gewählt werden kann, um ein schnelles Auffüllen des Zwischenspeichers 8 bzw. 16 zu gewährleisten. Die zweite Lesegeschwindigkeit VSPO wird vorzugsweise innerhalb des Fangbereiches der Bittakt-PLL 5 gewählt, um trotz des Veränderns der Lesegeschwindigkeit SSPO eine zur Signalverarbeitung erforderliche Bittaktrückgewinnung und das Schreiben in den Zwischenspeicher 8 bzw. 16 ohne Unterbrechung zu ermöglichen. Der Füllstandswert N% des Zwischenspeichers 8 bzw. 16, bei dem die Umschaltung zwischen den Lesegeschwindigkeiten SSPO, VSPO zum Verhindern eines Überlaufs des Zwischenspeichers 8 bzw. 16 vorzunehmen ist, wird entscheidend vom Übergangsverhalten des Abspielgerätes zwischen den Geschwindigkeiten SSPO und VSPO bestimmt und kann beispielsweise 80% des maximalen Speichervolumens des Zwischenspeichers 8 bzw. 16 betragen. Das maximale Speichervolumen des Zwischenspeichers 8 bzw. 16 bestimmt dabei die Zeit, die während des Auftretens von Erschütterungen störungsfrei überbrückt werden kann. Ein diesem Verfahren entsprechendes Ablaufdiagramm ist in Fig 5 dargestellt. Diesem Ablaufdiagramm entsprechend wird während des Lesens des Informationsträgers 1 mit der ersten Lesegeschwindigkeit SSPO der Füllstand des Zwischenspeichers 8 bzw. 16 überprüft. Hierzu wird der als RAM Level bezeichnete aktuelle Füllstand des Zwischenspeichers 8 bzw. 16 mit einem vorgegebenen Füllstand N, der ein prozentualer Wert N% des maximalen Speichervolumens des Zwischenspeichers 8 ist, verglichen. Ist der als RAM Level bezeichnete aktuelle Füllstand des Zwischenspeichers 8 kleiner als der vorgegebene Füllstandswert N%, wird der Lesevorgang bis zur zweiten Lesegeschwindigkeit VSPO beschleunigt. Die zweite Lesegeschwindigkeit VSPO wird dann so lange beibehalten, bis der als RAM Level bezeichnete aktuelle Füllstand des Zwischenspeichers 8 größer als der vorgegebene Füllstandswert N% ist. Übersteigt der als RAM Level bezeichnete aktuelle Füllstand des Zwischenspeichers 8 den vorgegebene Füllstandswert N%, wird die Lesegeschwindigkeit VSPO vorzugsweise bis zur ersten Lesegeschwindigkeit SSPO verringert. Dadurch wird erreicht, daß sich der aktuelle Füllstand RAM Level nur noch mit sinkender Geschwindigkeit erhöht und bei Erreichen der ersten Lesegeschwindigkeit SSPO nicht weiter ansteigt, da bei dieser Geschwindigkeit Schreib- und Auslesegeschwindigkeit übereinstimmen. Der Füllstandswert N% wird derart gewählt, daß unter Berücksichtigung dieses Übergangsverhaltens die maximale Speicherkapazität des Zwischenspeichers 8 nicht überschritten wird. Der konkrete Füllstandswert N% ist sowohl von der Höhe der zweiten Lesegeschwindigkeit VSPO als auch von der Geschwindigkeit der Umsteuerung zwischen den Geschwindigkeiten, die von der Trägheit des Systems beeinflußt wird, abhängig und kann beispielsweise 80% der maximalen Speicherkapazität des Zwischenspeichers 8 bzw. 16 betragen.

Die erste Lesegeschwindigkeit SSPO ist vorzugsweise gleich der zur Informationswiedergabe verwendeten Geschwindigkeit und die zweite Lesegeschwindigkeit VSPO ist vorzugsweise gegenüber der ersten Lesegeschwindigkeit um 80% erhöht.

Ist der aktuelle Füllstand RAM Level nicht geringer als der vorgegebene Füllstandswert N%, wird ein grundsätzlich vom Mikroprozessor 13 bereitgestelltes Signal ausgewertet, das eine Information darüber darstellt, ob beispielsweise eine Erschütterung oder ein sogenannter Schock aufgetreten ist und das Schreiben in den Zwischenspeicher 8 bzw. 16 zu stoppen ist oder aufgrund eines Bedienerbefehls ein anderer Speicherort auf dem Informationsträger 1 anzuspringen ist. Nach einer Schockerholung bzw. Rückstellung der Abtasteinrichtung 2 und erfolgreichem Sprung wird dann das Schreiben in den Zwischenspeicher 8 nach erfolgter Datensynchronisation fortgesetzt. Schock kann auch detektiert und bearbeitet bzw. korrigiert werden, wenn der Füllstand = N% noch nicht erreicht ist. Die zur Korrektur verfügbare Zeit ist vom aktuellen Fuellstand abhängig.

Einer zweiten Ausführung entsprechend, die nicht dargestellt ist, werden als vorgegebener Füllstandswert N% ein erster Füllstandswert N1 und ein zweiter Füllstandswert N2 verwendet, wobei der zweite Füllstandswert N2 größer als der erste Füllstandswert N1 ist. Hinsichtlich aller anderen Bestandteile sind die Ausführungen identisch, so daß sich die Erläuterungen auf deren Unterschied beschränken können. Das Verwenden eines ersten und eines zweiten vorgegebenen Füllstandswertes N1,N2 zum Steuern der Lesegeschwindigkeit in erschütterungsresistenten Abspielgeräten ist insbesondere hinsichtlich einer geringeren Anzahl von Umsteuerungen zwischen den Lesegeschwindigkeiten SSPO,VSPO vorteilhaft. Mit einem ersten und einem zweiten vorgegebenen Füllstandswert N1,N2 zum Steuern der Lesegeschwindigkeit wird eine der Differenz der Füllstandswerte N1,N2 entsprechende Hysterese gebildet, die dazu führt, daß von der ersten Lesegeschwindigkeit SSPO zur zweiten Lesegeschwindigkeit VSPO erst bei einem unteren Füllstandswert N1 beschleunigt und die Lesegeschwindigkeit VSPO erst bei Überschreiten oder ab einem vorgegebenen oberen Füllstandswert N2 auf die erste Lesegeschwindigkeit SSPO verringert wird. Unter vergleichbaren Bedingungen sinkt dadurch die Anzahl der Umsteuerungen, es wird eine größere Laufruhe erreicht und gleichzeitig der Energieverbrauch weiter gesenkt.

Das Umsteuern von einer esten Lesegeschwindigkeit SSPO auf eine zweite Lesegeschwindigkeit VSPO kann Fig. 6 entsprechend mit einer variablen Referenzfrequenz VR vorgenommen werden, die mit dem Mikroprozessor MPU bzw. 13 eingestellt wird. Hierin besteht ein erster Unterschied zu dem in Fig. 7 angegebenen Blockschaltbild zur Steuerung des Antriebsmotors M des bekannten erschütterungsresistenten Abspielgeräts gemäß Fig. 3. Trotz der variablen Referenzfrequenz VR wird eine Steuerung CLV Servo Controller vorgesehen, mit der die Drehzahl des Antriebsmotors M für eine konstante Lesegeschwindigkeit unabhängig vom Abtastradius eingestellt wird. Dies ist erforderlich, da die Drehzahl des Antriebsmotors M in Abhängigkeit vom Abtastradius für eine konstante Lesegeschwindigkeit unterschiedlich einzustellen ist. Der Drehzahlregelung des Antriebsmotors M, die auf einem Vergleich der aktuelle Geschwindigkeitsinformation SPI mit einer Referenz beruht, ist eine Stelleinrichtung überlagert, die von dem an der Steuerung CLV Servo Controller angeschlossenen Mikroprozessor MPU,13 und der mit diesem variabel einstellbaren Referenzfrequenz VR gebildet wird. Dies würde ein Umsteuern zwischen unterschiedlichen Lesegeschwindigkeiten SSPO und VSPO prinzipiell ermöglichen. Um jedoch den Energieverbrauch und den Aufwand zusätzlich zu senken, ist in der Verbindung zum Antriebsmotor M gemäß Fig. 6 ein auch in Fig. 5 dargesteller Schalter SW vorgesehen. Mit diesem Schalter SW wird insbesondere während des Verringerns der Drehzahl des Antriebsmotors M die Energiezufuhr unterbrochen oder zumindest stark reduziert, wenn als Schalter SW ein hinsichtlich seiner Leitfähigkeit steuerbarere Halbleiter als elektronischer Schalter SW verwendet wird. Dadurch wird während des Verringerns der Drehzahl keine Energie für den Antriebsmotor M benötigt und der Energieverbrauch verringert. Dieser Schalter SW, der gegenüber der bekannten Lösung scheinbar einen erhöhten Aufwand darstellt, trägt jedoch zum Verringern des Aufwandes bei. Dies resultiert daraus, daß die Drehzahlregelung, insbesondere die Steuerung CLV Servo Controller anderenfalls mit unterschiedlichen Zeitkonstanten vorzusehen wäre. Einerseits sind nämlich Abweichungen von einer vorgegebenen Lesegeschwindigkeit mit der Steuerung CLV Servo Controller möglichst schnell auszuregeln und andererseits sollte das Umsteuern zwischen den Lesegeschwindigkeiten SSPO und VSPO möglichst langsam erfolgen, um den Energieverbrauch und die Anforderungen an die PLL gering zu halten. Ein hartes Umsteuern würde zu einem erhöhten Energieverbrauch führen. Deshalb ist der Schalter SW nicht nur unter dem Gesichtspunkt eines geringeren Energieverbrauchs vorteilhaft. Er besitzt eine Doppelfunktion und wird vorzugsweise von der Steuerung CLV Servo Controller bzw. dem Mikroprozessor MPU 13 gesteuert. Fig. 6 entsprechen kann der Schalter SW durch Kombination mit dem Treiber D auch als einheitliche Baugruppe D+SW ausgeführt werden.

Das dem verbesserten erschütterungsresistenten Abspielgerät mit verringertem Energieverbrauch zugrunde liegende Verfahren wird zuammenfassend nochmals anhand des in Fig. 8 dargestellten Ablaufdiagramms erläutert.

Der Darstellung entsprechend wird von einer Normalgeschwindigkeit SSPO ausgegangen, die der einfachen Lesegeschwindigkeit SSPO des Informationsträgers entspricht und damit im wesentlichen mit der Geschwindigkeit übereinstimmt, mit welcher auch der Zwischenspeicher zur Informationswiedergabe ausgelesen wird. Sollte der Füllstand RAM Level des Zwischenspeichers einen vorgegebenen Füllstand N% unterschreiten, wird die Lesegeschwindigkeit SSPO so lange beschleunigt, bis eine durch den Fangbereich der PLL bestimmte maximale Lesegeschwindigkeit VSPO erreicht beziehungsweise ein vorgegebener Füllstand M% des Zwischenspeichers überschritten wird. Der Füllstand M% entspricht vorzugsweise nicht dem maximalen Speichervolumen des Zwischenspeichers, kann identisch mit dem vorgegebenen Füllstand N% sein oder einem Füllstand N2 entsprechen. Nach Überschreiten des Füllstandes M% wird der Antriebsmotor M mit Motor AUS von der Energieversorgung abgetrennt, so daß kein Verbrauch mehr auftritt. Hierzu wird der Schalter SW geöffnet. Dann wird das Unterschreiten einer Geschwindigkeit Q überwacht, die vorzugsweise der einfachen Lesegeschwindigkeit SSPO entspricht, jedoch auch geringer als die Normalgeschwindigkeit SSPO innerhalb des Fangbereiches der PLL gewählt werden kann. Gleichzeitig wird der Füllstand RAM Level des Zwischenspeichers dahingehend überwacht, ob er noch größer als ein vorgegebener Füllstand N% ist. Für den Zeitraum, in dem die Drehzahl des Antriebsmotors bzw. die Lesegeschwindigkeit eine vorgegebene Geschwindigkeit Q nicht unterschreitet und auch ein vorgegebener Füllstand N% des Zwischenspeichers nicht unterschritten werden, kann der Antriebsmotor M zum Verringern des Energieverbrauchs von der Energieversorgung bzw. vom Treiber D abgetrennt werden. Erst wenn einer der vorgenannten Parameter unterschritten wird, erfolgt das Zurückkehren zur Normalgeschwindigkeit durch Anschalten der den Antriebsmotor M treibenden Energieversorgung. Sollte ein Schock auftreten oder ein Sprung zu einem anderen Abtastort erforderlich sein, werden das weitere Schreiben in den Speicher gestoppt und das Rücksetzverfahren an den Ort der Unterbrechung oder ein Spursprung eingeleitet sowie das Schreiben nach der Synchronisation fortgesetzt, wobei das Lesen mit Normalgeschwindigkeit SSPO durchgeführt wird, sofern ein vorgegebener Füllstand N% des Zwischenspeichers nicht unterschritten wird.

Mit dem Abtrennen des Antriebsmotors M verringert sich die Drehzahl in Abhängigkeit von der durch die Masse des Rotors, des Plattentellers und des Informationsträgers bedingten Trägheit nur allmählich, so daß dies vorteilhaft zum Verringern des Energieverbrauchs verwendet werden kann.

Neben dem Verringern der Rücksprungzahl und dem Senken des Energieverbrauchs ist die Synchronisation bzw. das nahtlose Schreiben von Daten in den Zwischenspeicher 8 entsprechend der auf dem Informationsträger 1 gespeicherten Information nach einer Unterbrechung ein weiterer Aspekt.

Obwohl die vorgenannten Ausführungsbeispiele bezüglich der Synchronisation mit dem bekannten Synchronisationsverfahren, das auf dem Vergleich von Audio- bzw. Wiedergabeinformationsdaten beruht, kombiniert werden können, wird eine weitere Ausführung angegeben, mit der die Zuverlässigkeit der Synchronisation weiter erhöht werden kann. Es sei erwähnt, daß die Anzahl der notwendigen Synchronisationen bereits durch eine geringere Anzahl von Rücksetzungen der Abtasteinrichtung 2 verringert wird, die durch das Verhindern des Überlaufs des Zwischenspeichers 8 bzw. 16 erreicht wird. Da das Schreiben in den Zwischenspeicher 8 bzw. 16 nur noch bei einer durch Schock oder Erschütterungen bedingten Unterbrechung des Lesens vom Informationsträger 1 unterbrochen wird, wird bereits eine höhere Zuverlässigkeit der bekannten Synchronisation erreicht, die jedoch durch eine andere Art der Synchronisation weiter erhöht werden kann. Die bereits in den vorgenannten Ausführungen erwähnte Steueranordnung 9 zum Steuern der Lesegeschwindigkeit SSPO,VSPO des Informationsträgers 1 in Abhängigkeit vom vorgegebenen Füllstand des Zwischenspeichers 8 bzw. 16 ist vorzugsweise als Bestandteil des Dekoders 11 des Abspielgerätes ausgeführt, wodurch vorteilhaft vom Informationsträger 1 detektierte Subcodeinformationen zur Signalverarbeitung und Steuerung des erschütterungsresistenten Abspielgerätes verwendet werden können. Einen ersten Beitrag liefert das Verwenden von Lesegeschwindigkeiten SSPO,VSPO innerhalb des Fangbereiches der Bittakt-PLL 5, wodurch ein ununterbrochenes Schreiben von Daten in den Zwischenspeicher 8 bzw.16 trotz Veränderung der Lesegeschwindigkeit ermöglicht wird.

Weiterhin ist der Zwischenspeicher 8 der in Fig. 5 dargestellten Ausführung entsprechend zwischen einer Impulsform- und EFM-Demodulatoreinheit 4 und der Fehlerkorrektur- und De-Interleavingeinheit 10 angeordnet. Diese Anordnung des Zwischewnspeichers 8 ermöglicht in vorteilhafter Weise das Verwenden von Adreßinformationen zur Synchronisation. Obwohl die in Subcodeinformationen vorhandenen Adreßinformationen nur in großen Abständen auftreten und die Lesegeschwindigkeit zeitweilig verändert wird, ist ihre Verwendung aufgrund der vom Zwischenspeicher 8 ausgehenden Zeitbasisausgleichsfunktion möglich. Den Ausgangspunkt dieser Synchronisation bildet ein gültiger Subcode, dessen Adreßinformation als Referenz sowohl für den Ort der Unterbrechung auf dem Informationsträger 1 als auch für die letzten gültigen Daten im Zwischenspeicher 8 und das Schreiben in den Zwischenspeicher 8 verwendet werden kann. Immer wenn ein gültiger Subcode auftritt, d.h. wenn die CIRC-Prüfung keinen Fehler signalisierte, gibt der den Subcode auswertende Mikroprozessor 13 der Steueranordnung 9 die Information, daß der letzte Subcode gültig war. Bei der CIRC-Prüfung handelt es sich um einen von Sony entwickelten Fehlerkorrekturcode, wobei CIRC die Abkürzung für Cross interleave reed solomon code darstellt. In der Steueranordnung 9 wird stets die erste Adresse des Subcodes abgespeichert, d.h. die Adresse der Synchronbyts SO,S1. Damit ist ein Ort der vom Informationsträger 1 gelesenen Daten lokalisiert.

Nachdem die Steueranordnung 9 die Information über das Vorliegenden eines gültigen Subcodes erhalten hat, wird die Adresse des Zwischenspeichers 8 vorzugsweise in einem Register der Steueranordnung abgespeichert. Dieser abgespeicherte Wert bildet dann die Referenz, wenn eine Erschütterung auftritt. Wenn eine Erschütterung oder ein sogenannter Schock auftritt, ist dadurch die letzte gültige Adresse in der Steueranordnung 9 abgespeichert. Es liegen somit Informationen darüber vor, an welcher Stelle auf dem Informationsträger eine Unterbrechung stattgefunden hat und welche Adresse noch gültig war, bei der in den Zwischenspeicher 8 geschrieben wurde. Nach der Unterbrechung durch einen Schock wird die Abtast- bzw. Leseeinheit an einen Ort des Informationsträgers 1 vor der Unterbrechung zurückgeführt. Dieser Ort kann der letzte gültige Ort oder ein Ort an der Stelle mehrerer Subcodes vor der Unterbrechung sein. Wird die Abtasteinrichtung 2 beispielsweise an einen Ort geführt, der fünf Subcodes vor der Unterbrechung lag, so ist bekannt, daß der Schock fünf Subcodes später auftrat , von dem die Adresse aufgrund der Speicherung in der Steueranordnung 9 bekannt ist. Von dieser Adresse ausgehend wird dann eine Adresse von in diesem Beispiel fünfmal die Anzahl der Bytes zwischen den Subcodes zurück berechnet, so daß der Ort im Zwischenspeicher 8 lokalisiert ist, ab dem der bisherige Zwischenspeicherinhalt überschrieben werden kann.

Mit der den Ort einer Unterbrechung auf dem Informationsträger 1 und im Zwischenspeicher 8 kennzeichnenden Adresse können die Synchronisation und das Schreiben in den Zwischenspeicher 8 nach einer Unterbrechung auch bereits vor der Adresse der Unterbrechung durchgeführt werden, da der Abstand zwischen der erneut gelesenen Adresse und der gespeicherten Adresse der Unterbrechung berechnet werden kann. Die der Adresse folgenden Daten werden dann überschrieben, wodurch ein Verkürzen der Zeit bis zur Synchronisation erreicht wird.

Ein weiterer Aspekte besteht in einer schnellen Verfügbarkeit von Daten zur Wiedergabe nach einem Start des Abspielgerätes. Wird das vorgestellte erschütteungsresistente Abspielgerät gestartet, stehen bereits bei Erreichen der Normalgeschwindigkeit, die der einfachen bzw. ersten Lesegeschwindigkeit SSPO entspricht, Daten des Informationsträgers 1 im Zwischenspeicher 8 bzw. 16 zur Wiedergabe zur Verfügung und die Wiedergabe muß nicht bis zum Beschleunigen auf die zweifache Lesegeschwindigkeit des bekannten Abspielgerätes verzögert werden, wodurch als weiterer Vorteil eine kürzere Zugriffszeit erreicht wird.

Obwohl die vorstehenden Ausführungen zur Synchronisation im wesentlichen auf einen Informationsträger 1 in Form einer CD bezogen wurden, so wird das Anwendungsgebiet dadurch nicht eingeschränkt, da grundsätzlich alle digitalen Signalspeicher bzw. Informationsträger, wie beispielsweise auch die digitale Bildplatte oder digitale Bänder, eine vergleichsweise ähnliche Datenstruktur aufweisen, die eine Anwendung des dargestellten Prinzips ermöglicht. Die Anwendung ist somit auch im Zusammenhang mit magnetischen oder mechanischen Abtasteinrichtungen sowie bandförmigen und anderen flächenhaften Informationsträgern möglich.

## Patentansprüche

1. Erschütterungsresistentes Abspielgerät mit reduziertem Energieverbrauch, das eine Steuereinheit und einen Zwischenspeicher zum Bereitstellen von Informationssignalen eines Informationsträgers (1) während einer Unterbrechung des Lesens von auf dem Informationsträger (1) gespeicherter Informationen enthält, **dadurch gekennzeichnet, dass** der Zwischenspeicher (8 oder 16) mit einer Steuereinheit verbunden ist, mit der zum Lesen von auf dem Informationsträger (1) gespeicherter Informationen in den Zwischenspeicher (8 oder 16) in Abhängigkeit davon ob der Füllstand (N%) des Zwischenspeichers (8 oder 16) unter einen vorgegebenen Wert unterhalb seiner Speicherkapazität fällt, Lesegeschwindigkeiten im Bereich von einer ersten Lesegeschwindigkeit (V1) bis zu einer zweiten Lesegeschwindigkeit (V2) kontinuierlich eingestellt werden und
die zweite Lesegeschwindigkeit(V2) sowohl größer als die erste Lesegeschwindigkeit (V1) als auch größer als eine Geschwindigkeit zum Bereitstellen von Informationssignalen des Informationsträgers (1) aus dem Zwischenspeicher (8 oder 16) ist, wobei die kontinuierliche Einstellung der Lesegeschwindigkeiten (V1, V2) innerhalb des großen Fangbereiches einer Bittakt-PLL (5) durchgeführt wird.

2. Erschütterungsresistentes Abspielgerät nach Anspruch 1, **dadurch gekennzeichnet, dass** der vorgegebene Füllstand (N%) des Zwischenspeichers (8 oder 16) ein zweiter Füllstand (N2) des Zwischenspeichers (8 oder 16) unterhalb der maximalen Speicherkapazität des Zwischenspeichers (8 oder 16) ist und ein erster Füllstandswert (N1) vorgesehen ist, wobei der erste Füllstandswert (N1) kleiner als der zweite Füllstand (N2) ist,
die erste Lesegeschwindigkeit (V1) bei Unterschreiten des ersten Füllstandswertes (N1) bis zur zweiten Lesegeschwindigkeit (V2) erhöht und die zweite Lesegeschwindigkeit (V2) bei Überschreiten des zweiten Füllstandes (N2) bis zur ersten Lesegeschwindigkeit (V1) verringert wird.

3. Erschütterungsresistentes Abspielgerät nach Anspruch 2, **dadurch gekennzeichnet, dass** die Steuereinheit (9) als integrierter Bestandteil eines zum Bereitstellen des vom Informationsträger (1) gelesenen Informationssignals vorgesehenen Decoders (11) ausgeführt ist.

4. Erschütterungsresistentes Abspielgerät nach einem der Ansprüche 1 bis 3, **dadurch gekennzeichnet, dass** der Zwischenspeicher (8) ein ARAM ist, der zwischen einer ersten Baugruppe zur Impulsformung (4) des vom Informationsträger (1) gelesenen Signals und einer zweiten Baugruppe zur Fehlerkorrektur (10) angeordnet ist.

5. Erschütterungsresistentes Abspielgerät nach einem der Ansprüche 1 bis 4, **dadurch gekennzeichnet, dass** das Synchronisieren der Daten nach einer Unterbrechung des Schreibens von Daten in den vor der Baugruppe zur Fehlerkorrektur (10) angeordneten Zwischenspeicher (8) mit Subcodeinformationen im Zwischenspeicher (8) durchgeführt wird.

6. Erschütterungsresistentes Abspielgerät nach Anspruch 5, **dadurch gekennzeichnet, dass** zur Synchronisation der Daten im Zwischenspeicher (8) nach einer Unterbrechung des Schreibens von Daten in den Zwischenspeicher (8) die Adresse eines Synchronbytes der Subcodeinformationen verwendet wird.

7. Erschütterungsresistentes Abspielgerät nach einem der Ansprüche 1 bis 2, **dadurch gekennzeichnet, dass** ein die variierende Lesegeschwindigkeit vom Informationsträger erzeugender Antriebsmotor (M) zum Abschalten der Energiezufuhr über einen Schalter (SW) mit einem den Antriebsmotor (M) ansteuernden Treiber (D) verbunden ist, so dass der Treiber (D) ab einem vorgegebenen Füllstand (N%) des Zwischenspeichers (8 oder 16) kein Antriebssignal für den Antriebsmotor (M) bereitstellt und zum Steuern eines Ein-/Ausschaltbetriebs des Schalters (SW) zum Variieren der Lesegeschwindigkeit zwischen einer Lesegeschwindigkeit (V1), die der Lesegeschwindigkeit entspricht mit welcher der Zwischenspeicher zum Bereitstellen von Informationssignalen vom Informationsträger ausgelesen wird und der schnelleren, zweiten Lesegeschwindigkeit (V2) eine Steueranordnung (9) vorgesehen ist.

8. Erschütterungsresistentes Abspielgerät nach Anspruch 7, **dadurch gekennzeichnet, dass** zum Umsteuern der ersten Lesegeschwindigkeit (V1 bzw. SSPO) vom Informationsträgers (1) auf die zweite Lesegeschwindigkeit (V2 bzw. VSPO) ein Miroprozessor (MPU) vorgesehen ist, mit dem eine zum Steuern des Antriebsmotors (M) vorgesehene Referenzfrequenz (VR) verändert wird.

9. Erschütterungsresistentes Abspielgerät nach Anspruch 7, **dadurch gekennzeichnet, dass** auch während des Abschaltens der Energiezufuhr zum Antriebsmotor (M) mit dem Schalter (SW) bis zum Verringern der Lesegeschwindigkeit auf die erste Lesegeschwindigkeit (V1 bzw. SSPO) Informationen mit einer variierenden Lesegeschwindigkeit in den Zwischenspeicher (8 oder 16) geschrieben werden.

10. Erschütterungsresistentes Abspielgerät nach Anspruch 1, **dadurch gekennzeichnet, daß** die erste Lesegeschwindigkeit (V1) kleiner oder gleich einer Geschwindigkeit zum Bereitstellen von Informationssignalen des Informationsträgers (1) aus dem Zwischenspeicher (8 oder 16) ist.

11. Erschütterungsresistentes Abspielgerät nach Anspruch 1, **dadurch gekennzeichnet, dass** das kontinuierliche Erhöhen beziehungsweise Verringern der Lesegeschwindigkeit im Bereich von einer ersten Lesegeschwindigkeit (V1) bis zu einer zweiten Lesegeschwindigkeit (V2) unabhängig vom Auftreten einer Unterbrechung des Lesens von auf dem Informationsträger (1) gespeicherter Informationen vorgesehen ist.

## Claims

1. Vibration-resistant playback device with reduced power consumption, which contains a control unit and a buffer for providing information signals from an information medium (1) during an interruption of the reading of information stored on the information medium (1), **characterized in that** the buffer (8 or 16) is connected to a control unit, with which, for reading information stored on the information medium (1) to the buffer (8 or 16), reading speeds are continuously set in the range from a first reading speed (V1) to a second reading speed (V2) as a function of whether the occupancy (N%) of the buffer (8 or 16) falls below a predetermined value below its storage capacity
and the second reading speed (V2) is both greater than the first reading speed (V1) and greater than a speed for providing information signals of the information medium (1) from the buffer (8 or 16), the continuous setting of the reading speeds (V1, V2) being carried out within the large capture range of a bit timing PLL (5).

2. Vibration-resistant playback device according to Claim 1, **characterized in that** the predetermined occupancy (N%) of the buffer (8 or 16) is a second occupancy (N2) of the buffer (8 or 16) below the maximum storage capacity of the buffer (8 or 16) and a first occupancy value (N1) is provided, the first occupancy value (N1) being less than the second occupancy (N2),
if the occupancy falls below the first occupancy value (N1), the first reading speed (V1) is increased to the second reading speed (V2) and, if the occupancy exceeds the second occupancy (N2), the second reading speed (V2) is reduced to the first reading speed (V1).

3. Vibration-resistant playback device according to Claim 2, **characterized in that** the control unit (9) is designed as an integrated part of a decoder (11) which is intended to provide the information signal read from the information medium (1).

4. Vibration-resistant playback device according to one of Claims 1 to 3, **characterized in that** the buffer (8) is an ARAM, which is arranged between a first assembly for the pulse shaping (4) of the signal read from the information medium (1) and a second assembly for error correction (10).

5. Vibration-resistant playback device according to one of Claims 1 to 4, **characterized in that** subcode information is used to synchronize the data in the buffer (8) following an interruption of the writing of data to the buffer (8) arranged upstream of the assembly for error correction (10).

6. Vibration-resistant playback device according to Claim 5, **characterized in that** the address of a synchronization byte of the subcode information is used to synchronize the data in the buffer (8) following an interruption of the writing of data to the buffer (8).

7. Vibration-resistant playback device according to either of Claims 1 and 2, **characterized in that**, for switching off the power supply, a drive motor (M) which produces the varying reading speed from the information medium is connected via a switch (SW) to a driver (D) driving the drive motor (M), so that, as from a predetermined occupancy (N%) of the buffer (8 or 16), the driver (D) does not provide a drive signal for the drive motor (M) and a control arrangement (9) is provided for controlling a switching on/off operation of the switch (SW) for varying the reading speed between a reading speed (V1) which corresponds to the reading speed at which the buffer is read out for providing information signals from the information medium and the faster, second reading speed (V2).

8. Vibration-resistant playback device according to Claim 7, **characterized in that**, for changing over the first reading speed (V1 or SSPO) from the information medium (1) to the second reading speed (V2 or VSPO), a microprocessor (MPU) is provided, with which a reference frequency (VR) provided for controlling the drive motor (M) is changed.

9. Vibration-resistant playback device according to Claim 7, **characterized in that**, even while the power supply to the drive motor (M) is switched off by the switch (SW) until the reading speed is reduced to the first reading speed (V1 or SSPO), information is written to the buffer (8 or 16) at a varying reading speed.

10. Vibration-resistant playback device according to Claim 1, **characterized in that** the first reading speed (V1) is less than or equal to a speed for providing information signals of the information medium (1) from the buffer (8 or 16).

11. Vibration-resistant playback device according to Claim 1, **characterized in that** the continuous increase or reduction of the reading speed in the range from a first reading speed (V1) to a second reading speed (V2) is provided independently of the occurrence of an interruption of the reading of information stored on the information medium (1).

## Revendications

1. Appareil de lecture résistant aux vibrations, avec réduction de la consommation d'énergie, doté d'une unité de commande et d'une mémoire tampon pour la mise à disposition de signaux d'information d'un support d'information (1) pendant une interruption de la lecture d'informations enregistrées sur le support d'information (1), **caractérisé en ce que** la mémoire tampon (8 ou 16) est reliée à une unité de commande qui, afin de lire des informations stockées sur le support d'information (1), dans la mémoire tampon (8 ou 16), suivant que le niveau (n%) de la mémoire tampon (8 ou 16) passe sous une valeur prédéfinie, sous sa capacité de stockage, permet de régler les vitesses de lecture en continu dans la plage d'une première vitesse de lecture (V1) à une deuxième vitesse de lecture (V2) et la deuxième vitesse de lecture (V2) est plus élevée que la première vitesse de lecture (V1) et également plus élevée qu'une vitesse pour la mise à disposition de signaux d'information du support d'information (1) à partir de la mémoire tampon (8 ou 16), le réglage continu des vitesses de lecture (V1, V2) étant réalisé à l'intérieur de la grande plage de capture d'un circuit PLL à rythme numérique (5).

2. Appareil de lecture résistant aux vibrations conforme à la revendication 1, **caractérisé en ce que** le niveau prédéfini (N%) de la mémoire tampon (8 ou 16) est un deuxième niveau (N2) de la mémoire tampon (8 ou 16) inférieur à la capacité de stockage maximale de la mémoire tampon (8 ou 16) et une première valeur de niveau (N1) inférieure au deuxième niveau (N2) est prévue, la première vitesse de lecture (V1) est augmentée en cas de dépassement de la première valeur de niveau (N1) jusqu'à la deuxième valeur de lecture (V2) et la deuxième vitesse de lecture (V2) est réduite en cas de dépassement du deuxième niveau (N2) jusqu'à la première vitesse de lecture (V1).

3. Appareil de lecture résistant aux vibrations conforme à la revendication 2, **caractérisé en ce que** l'unité de commande (9) est réalisée comme un composant intégré du décodeur (11) prévu pour mettre à disposition le signal d'information lu par le support d'information (1).

4. Appareil de lecture résistant aux vibrations conforme à l'une des revendications 1 à 3, **caractérisé en ce que** la mémoire tampon (8) est une mémoire ARAM qui est placée entre un premier bloc pour la conformation d'impulsion (4) du signal lu par le support d'information (1) et un deuxième bloc pour la correction d'erreurs (10).

5. Appareil de lecture résistant aux vibrations conforme à l'une des revendications 1 à 4, **caractérisé en ce que** la synchronisation des données est réalisée après une interruption de l'écriture de données dans la mémoire tampon (8) placée avant le bloc pour la correction d'erreurs (10), avec les informations de sous-code dans la mémoire tampon (8).

6. Appareil de lecture résistant aux vibrations conforme à la revendication 5, **caractérisé en ce que** l'adresse d'un bit de synchronisation des informations de sous-code est utilisée pour la synchronisation des données dans la mémoire tampon (8), après une interruption de l'écriture de données dans la mémoire tampon (8).

7. Appareil de lecture résistant aux vibrations conforme à l'une des revendications 1 à 2, **caractérisé en ce qu**'un moteur d'entraînement (M), produisant la vitesse de lecture variante et permettant de couper l'arrivée d'énergie, est relié, via un commutateur (SW), à un excitateur (D) commandant le moteur d'entraînement (M), de sorte que l'excitateur (D) ne mette à disposition aucun signal d'entraînement pour le moteur d'entraînement (M) à partir d'un niveau prédéfini (N%) de la mémoire tampon (8 ou 16) et un aménagement de commande (9) est prévu pour commander une mise en et hors circuit du commutateur (SW) et pour faire varier la vitesse de lecture entre une vitesse de lecture (V1), qui correspond à la vitesse de lecture à laquelle la mémoire tampon est lue pour mettre à disposition les signaux d'information du support d'information, et la deuxième vitesse de lecture (V2), plus rapide.

8. Appareil de lecture résistant aux vibrations conforme à la revendication 5, **caractérisé en ce qu**'un microprocesseur (MPU) est prévu pour inverser la première vitesse de lecture (V1 ou SSPO) du support d'information sur la deuxième vitesse de lecture (V2 ou VSPO) et grâce auquel une fréquence de référence (VR) prévue pour commander le moteur d'entraînement (M) est modifiée.

9. Appareil de lecture résistant aux vibrations conforme à la revendication 7, **caractérisé en ce que** des informations sont également écrites à une vitesse de lecture variante dans la mémoire tampon (8 ou 16), pendant la coupure de l'arrivée d'énergie au moteur d'entraînement (M) avec le commutateur (SW), jusqu'à la réduction de la vitesse de lecture à la première vitesse de lecture (V1 ou SSPO).

10. Appareil de lecture résistant aux vibrations conforme à la revendication 1, **caractérisé en ce que** la première vitesse de lecture (V1) est inférieure ou égale à une vitesse pour la mise à disposition de signaux d'information du support d'information (1) à partir de la mémoire tampon (8 ou 16).

11. Appareil de lecture résistant aux vibrations conforme à la revendication 1, **caractérisé en ce que** l'augmentation ou la réduction continue de la vitesse de lecture dans la plage d'une première vitesse de lecture (V1) à une deuxième vitesse de lecture (V2) est prévue indépendamment de l'apparition d'une interruption de la lecture des informations stockées sur le support d'information (1).
